# EUROPEAN PATENT SPECIFICATION

(11) **EP 1 548 044 B1**
(45) Date of publication and mention of the grant of the patent: **03.07.2013**
(21) Application number: 04447233.0
(22) Date of filing: 22.10.2004
(51) Int. Cl.: C08G 61/02, C08G 61/12, C08G 61/00

(54) **Method of preparing derivatives of polyarylene vinylene and method of preparing an electronic device including same**
Verfahren zur Herstellung von Polyarylenvinylenderivaten und Herstellungsmethode für eine elektronische Vorrichtung daraus.
Procédé pour préparer des dérivés de vinylène de polyarylène et procédé pour fabriquer un dispositif électronique

(30) Priority: 22.10.2003 EP 03447264
(43) Date of publication of application: 29.06.2005
(73) Proprietor: IMEC, 3001 Leuven (BE); Universiteit Hasselt, 3500 Hasselt (BE)
(72) Inventor: Vanderzande, Dirk, 3500 Hasselt (BE); Lutsen, Laurence, 59210 Coudekerque-Branche (FR); Henckens, Anja, 3910 Neerpelt (BE); Colladet, Kristof, 3500 Hasselt (BE)
(74) Representative: Bird, Ariane

(56) References cited:
- EP-A2- 0 707 022
- WO-A1-90/13148
- US-A- 5 817 430
- TOYOSHIMA R ET AL: "SYNTHESIS AND PROPERTIES OF POLY(THIENYLENEVINYLENE) DERIVATIVES WITH HEXYL GROUPS" SYNTHETIC METALS, ELSEVIER SEQUOIA, LAUSANNE, CH, vol. 84, no. 1-3, 1 January 1997 (1997-01-01), pages 431-432, XP001077754 ISSN: 0379-6779
- SAITO ET AL: 'SYNTHESIS OF SOLUBLE POLYARYLENE VINYLENES ETC' MACROMOLECULES vol. 4528, no. 24, 20 November 1995, WASHINGTON US, pages 8363 - 8367, XP000539439

## Description

### Technical field of the invention

The present invention relates to a method for the preparation of soluble precursor polymers of arylene and heteroarylene vinylene polymers and their conversion towards arylene and heteroarylene vinylene polymers, and to devices including the same.

### Background of the invention

Conjugated polymers are of great interest for the development of optical and electronic applications. The most investigated conjugated polymers are poly(thiophene) (PT) and poly(p-phenylene vinylene) (PPV). Also poly(2,5-thienylene vinylene) (PTV) has attracted great attention because of its high electrical conductivity upon doping and its possible application as a semiconductor in all-polymer field effect transistors. Additionally, PTV is a low band gap semiconductor polymer, which makes it a very interesting material for organic photovoltaic devices.

Several methods have been developed to synthesize PTV. In the early days, PTV was synthesised via the Wessling polymerisation method, which is described in US 3,401,152 by R. A. Wessling and R. G. Zimmerman and in J. Polym. Sci.: Polym. Symp. 1985, 72, 55 by R. A. Wessling. The polymerization reaction according to the Wessling method is difficult, because the products tend to form a gel. Moreover, strong acids, which could be toxic, are required during the conversion reaction.

In 1987, Murase et al. and Yamada et al. reported the synthesis of PTV via a precursor polymer with methoxy leaving groups (I. Murase, T. Ohnishi, T. Noguchi, M. Hirooka, Polym. Commun. 1987, 28, 229; S. Yamada, S. Tokito, T. Tsutsui, S. Saito, J. Chem. Soc., Chem. Commun. 1987, 1448). This reaction is an acid catalysed conversion reaction, which is incompatible with device fabrication.

In 1990, Elsenbaumer et al. reported the synthesis and characterisation of PTV and some alkyl-substituted PTV's (R. L. Elsenbaumer, Mol. Cryst. Liq. Cryst 1990, 186, 211). These methods are far from ideal especially for the PTV derivatives due to the relative high reactivity of the monomer and precursor polymer which complicates both monomer and polymer synthesis. The high reactivity is originated from the high electron density of the thiophene ring, which induces a very high instability of the starting monomer when this monomer is reached but generally with low reproducibility and very low yields due to many side-reactions.

This is also the reason why problems occur by using the more recent precursor methods like the sulfinyl route, developed by Vanderzande et al. in 1997 (A. J. J. M. Van Breemen, A. C. J. Issaris, M. M. de Kok, M. J. A. N. Van Der Borght, P. J. Adriaensens, J. M. J. V. Gelan, D. J. M. Vanderzande, Macromolecules 1999, 32, (18), 5728), the bis-xanthate route developed by Son in 1995 and Bum et al. in 2001 and described in (US patent 1997/5,621,069; European patent EP 0 707 022 A2; S-C. Lo, L.-O. Palsson, M. Kilitziraki, P. L. Burn, I. D. W. Samuel, J. Mater. Chem. 2001, 11, 2228) and the bis-sulfide route developed by Herwig et al in 2003 (US patent 2003/0027963 A1).

U.S. Pat. N° 5,817,430 discloses a process for the preparation of conjugated polymers comprising Polymerizing at least one monomer of the formula X-CH₂-Ar-CH₂-X' in the presence of a base and at least one chain end controlling additive to form a soluble conjugated poly(arylene vinylene).

Toyoshima et al (Synthetic Metals 84 (1997) 431-432) discloses the synthesis of poly(thienylenevinylene) derivatives with hexyl side-chains.

Saito et al (Macromolecules, Vol. 28, N° 24, 1995) discloses the synthesis of soluble poly(arylenevinylene) via a Wittig reaction. It mentions in the introduction the synthesis of poly(arylenevinylene) via a precursor route involving the reaction of a monomer (arylenedimethylene)bis(dialkylsulfonium halide) monomer with a base in aqueous solution to provide a soluble precursor Polymer, which is then cast into a film and then converted to poly(arylenevinylene) by thermal elimination.

WO9013148 relates to an electroluminescent device comprising a semiconductor layer in the form of a thin dense polymer film comprising at least one conjugated Polymer, a first contact layer in contact with a first surface of the semiconductor layer, and a second contact layer in contact with a second surface of the semiconductor layer. The polymer film of the semiconductor layer has a sufficiently low concentration of extrinsic charge carriers that on applying an electric field between the first and second contact layers across the semiconductor layer so as to render the second contact layer positive relative to the first contact layer charge carriers are injected into the semiconductor layer and radiation is emitted from the semiconductor layer; The polymer film can be poly(p-phenyenevinylene) PPV wherein the phenylene ring may optionally carry one or more substituents each independently selected from alkyl (preferably methyl), alkoxy (preferably methoxy or ethoxy), halogen (preferably chlorine or bromine) or nitro.

To use PTV, other poly(arylene vinylene)s and poly(heteroarylene vinylene) derivatives in plastic electronics, an easy accessible precursor polymer that can be manufactured on a large scale is a prerequisite.

### Summary of the invention

It is an object of the present invention to provide a method for the synthesis of soluble or insoluble conjugated polymers like arylene of heteroarylene vinylene, optionally in good yields, optionally with high molecular weight, optionally good quality, e.g.low defect level and optionally in large scale. It is a further aim of this invention to describe the use of these soluble or insoluble conjugated polymers for organic solar cells, organic transistors and other kinds of electronic devices.

It is a further aim to describe a novel precursor polymer, to be used as intermediate compound in the synthesis of arylene of heteroarylene vinylene polymers.

In a first aspect of this invention, a method for the preparation of a precursor polymer is disclosed. The precursor polymer has the general formula 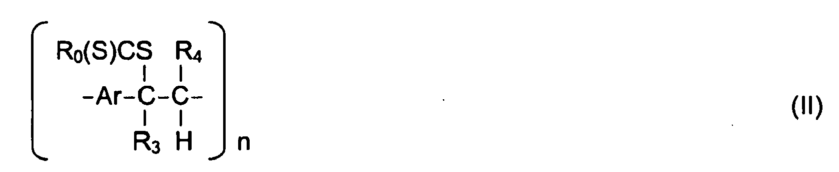 wherein Ar is an aromatic divalent group or a heteroaromatic divalent group, wherein R₀ is an organic group selected from the group consisting of an amine -NR₁R₂, an aryloxy group, an alkyl group, an aryl group, an alkylaryl group, an arylalkyl group, a thioether group, an ester group, an acid carboxylic group, a heterocyclic group, and wherein R₃ and R₄ are independently from each other hydrogen or an organic group selected from the group consisting of a C₁-C₂₀-alkyl group, a cyclic C₃-C₂₀-alkyl group, an aryl group, an alkylaryl group, an arylalkyl group, a thioether group, an ester group, an acid carboxylic group and a heterocyclic group, and wherein n is the number of repeating units.

In a specific embodiment according to the invention, the precursor polymer may have the formula as formula (II) wherein R₀ is an amine -NR₁R₂ 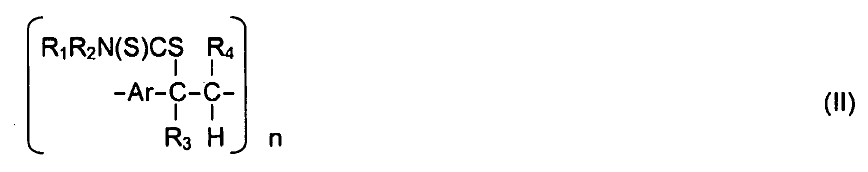 and in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R1 and R2 may be linked together to form a cycle. One typical example of such a precursor polymer may be a precursor polymer wherein R₀ = -NR₁R₂ and wherein R₁=R₂=Et:

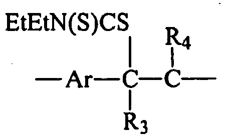

In other specific examples of precursor polymers which may be used in embodiments according to the invention, R₀ may be a phenyl group, a methyl group or a group (F₆C₆O):

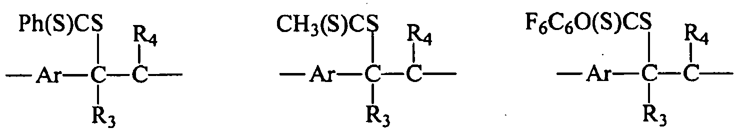

In further specific examples according to the invention, precursor polymers may be used which are based on poly(p-phenylene vinylene) derivatives, such as for example alkoxy poly(p-phenylene vinylene) (alkoxy-PPV) derivatives such as e.g. precursor polymers based on poly(2-methoxy,5-3',7'-dimethyloctyloxy)-1,4-phenylene vinylene (MDMO-PPV or OC₁C₁₀PPV), or based on poly(p-thienylene vinylene) (PTV) derivatives.

The method comprises the steps of :
- providing a monomer having the general formula :
   wherein Ar is an aromatic divalent group or a heteroaromatic divalent group,
   wherein R₀ is an organic group selected from the group consisting of an amine -NR₁R₂, an aryloxy group, an alkyl group, an aryl group, an alkylaryl group, an arylalkyl group, a thioether group, an ester group, an acid carboxylic group, a heterocyclic group, and
- reacting said monomer with a basic compound in the presence of an organic solvent to obtain said precursor polymer, wherein the amount of said basic compound is between 1 and 2 equivalents with respect to the monomer,
hereby not requiring the use of a chain end controlling additive.

In a specific embodiment, a monomer may be provided, having the formula according to formula (I), wherein R₀ is an amine -NR₁R₂, in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R₁ and R₂ may be linked together to form a cycle.

The basic compound may be selected from the group consisting of a metal oxide, a metal alkoxide, a metal amide, organometal compounds, grignard reagents and ammonium hydroxide. The amount of basic compound may be between 1 and 2 equivalents with respect to the monomer.

The concentration of the monomer used in the method of the present invention may be between 0.1 and 0.3 M.

In an embodiment of the first aspect of the invention, the Ar group may be an aromatic divalent group with 4 to 20 carbon atoms which may be substituted with one or more substituents independently selected from the group consisting of C₁-C₂₀-alkyl, C₃-C₂₀-alkoxy or C₁-C₂₀-alkylsulfate, poly(ethylene oxide) (PEO) or oligo(ethylene oxide), poly(ethylene glycol) (PEG) or oligo(ethylene glycol). These aromatic divalent groups may comprise up to 4 heteroatoms chosen from the group comprising oxygen, sulphur, and nitrogen.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar is 1,4-phenylene or 2,5-thienylene and most preferably Ar is 2,5-thienylene.

In a preferred embodiment, R₁ and R₂ may be a C₁-C₂₀-alkyl group. In another embodiment, R₁ and R₂ may be selected from the group consisting of methyl, ethyl and isopropyl.

In a further embodiment of the first aspect of this invention, reacting the monomer with a basic compound may be performed at a temperature between -78°C and 200°C, preferably between -40°C and 120°C, and most preferably between -20°C and 30°C. The temperature may be selected such that the average molecular weight of the soluble precursor polymer is as high as possible and that the polydispersity is as low as possible.

The method as described in the first aspect of this invention may require symmetrical starting monomers. Symmetrical starting molecules have the advantage that they are easier to synthesise than asymmetric starting monomers. Furthermore, symmetrical starting monomers with dithiocarbamate groups are stable in time. The polymerisation of the symmetrical monomer in a solvent and in the presence of a base may lead to a precursor polymer soluble in common organic solvents. Those solvents may be polar, apolar and mixtures thereof. The solvent may for example be an aprotic solvent. The dithiocarbamate groups act as a leaving group and as a polarizer during the polymerisation.

Furthermore, the present invention provides a precursor polymer with the formula : 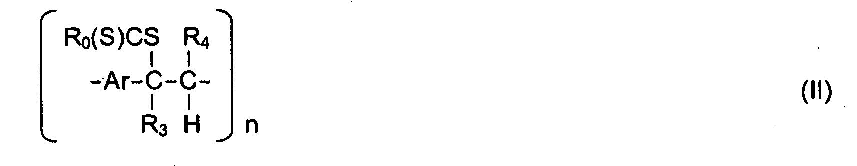 wherein Ar is an aromatic divalent group or heteroaromatic divalent group, wherein R₀ is an organic group selected from the group consisting of an amine -NR₁R₂, an aryloxy group, an alkyl group, an aryl group, an alkylaryl group, an arylalkyl group, a thioether group, an ester group, an acid carboxylic group or a heterocyclic group. The C₁-C₂₀-alkyl group, cyclic C₄-C₂₀-alkyl group, phenyl group and benzyl group may comprise heteroatoms and substituents. In a preferred embodiment, R₁ and R₂ may independently be selected from methyl, ethyl or propyl. R₃ and R₄ are chosen from the group comprising a hydrogen atom and a C₁-C₂₀-alkyl group, a cyclic C₄-C₂₀-alkyl group, a phenyl group and a benzyl group, which groups may comprise heteroatoms and substituents. In a preferred embodiment, R₃ and R₄ may be hydrogen. All possible combinations of Ar, R₀, R₁, R₂, R₃ en R₄ may be included in this invention.

In a specific embodiment, the precursor polymer may have the formula as formula (II) wherein R₀ is an amine -NR₁R₂: 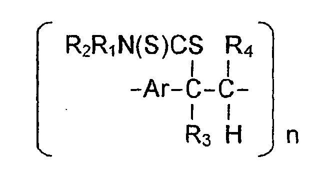 and in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R1 and R2 may be linked together to form a cycle. One typical example of such a precursor polymer may be a precursor polymer wherein R₀ = -NR₁R₂ and wherein R₁=R₂=Et:

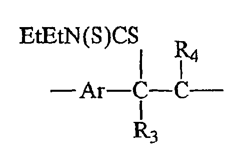

In other specific examples of precursor polymers which may be used in embodiments according to the invention, R₀ may be a phenyl group, a methyl group or a group (F₆C₆O):

In other specific examples according to the invention, precursor 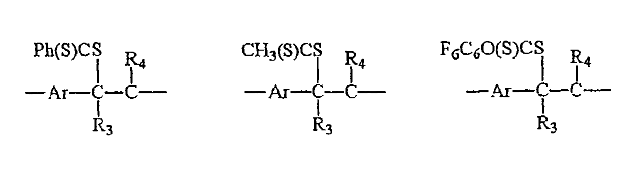 polymers may be based on poly(p-phenylene vinylene) derivatives, such as for example alkoxy poly(p-phenylene vinylene) (alkoxy-PPV) derivatives such as e.g. poly(2-methoxy,5-3',7'-dimethyloctyloxy)-1,4-phenylene vinylene (MDMO-PPV or OC₁C₁₀PPV), or on poly(p-thienylene vinylene) derivatives.

In a preferred embodiment, the Ar group may comprise 4 to 20 carbon atoms. In another embodiment, the Ar groups may be substituted with a substituent chosen from the group consisting of a C₁-C₂₀-alkyl, C₃-C₂₀-alkoxy, C₁-C₂₀-alkylsulfate, poly(ethylene oxide) (PEO) or oligo(ethylene oxide), poly(ethylene glycol) (PEG) or oligo(ethylene glycol), a phenyl or a benzyl group and these Ar groups may comprise up to 4 heteroatoms chosen from the group comprising oxygen, sulphur, and nitrogen in the aromatic cyclic system. In other embodiments, the substituents may be linear, or cyclic or two substituents may be linked together to form a cycle on the Ar groups. In still a further embodiment, the substituents may contain charges, ions, cations or anions.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

The precursor polymers, according to present invention, may show high molecular weight, between 5000 and 500000, more particularly between 7000 and 250000, especially between 7500 and 100000 Dalton. Furthermore, the polydispersity of the precursor polymers, according to the present invention, may be between 1.5 and 5.5, preferably below 2. The precursor polymer may be obtained in good overall yields in a reproducible way. Large-scale production may be a possibility.

In a second aspect of this invention, a method for the preparation of soluble or insoluble conjugated arylene and heteroarylene vinylene polymers is disclosed. The method does not require the use of chain end controlling additives. The soluble or insoluble conjugated arylene heteroarylene vinylene polymers have the general formula: 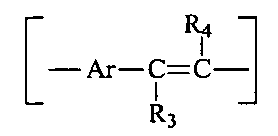 wherein Ar is equal to the Ar group in the first aspect of this invention.

The method comprises the steps of :
- providing at least one precursor polymer having the general formula : 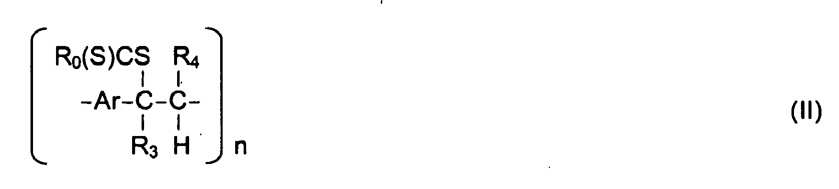 wherein Ar is an aromatic divalent group or an heteroaromatic divalent group, wherein R₀ is an organic group selected from the group consisting of an amine -NR₁R₂, an aryloxy group, an alkyl group, an aryl group, an alkylaryl group, an arylalkyl group, a thioether group, an ester group, an acid carboxylic group, and a heterocyclic group, and wherein R₃ and R₄ are independently from each other hydrogen or an organic group selected from the group consisting of a C₁-C₂₀-alkyl group, a cyclic C₃-C₂₀-alkyl group, an aryl group, an alkylaryl group, an arylalkyl group, a thioether group, an ester group, an acid carboxylic group and a heterocyclic group, wherein n is the number of repeating units, and
- subjecting the precursor polymer to a thermal conversion reaction which comprises total or partial elimination of the -SC(S)R₀ groups by thermal treatment at a temperature between 30°C and 300°C in solution or in thin film.

In a specific example, a precursor polymer is provided with formula as formula (II) wherein R₀ is an amine -NR₁R₂: 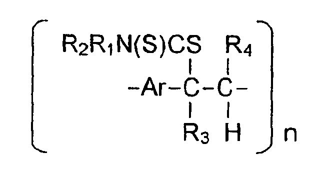 and in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R1 and R2 may be linked together to form a cycle. One typical example of such a precursor polymer may be a precursor polymer wherein R₀ = -NR₁R₂ and wherein R₁=R₂=Et.

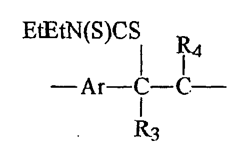

In other specific examples of precursor polymers which may be used in embodiments according to the invention, R₀ may be a phenyl group, a methyl group or a group (F₆C₆O):

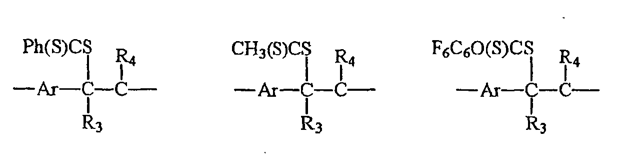

In other specific examples according to the invention, precursor polymers may be used which are based on poly(p-phenylene vinylene) derivatives, such as for example alkoxy poly(p-pheniyne vinylene) (alkoxy-PPV) derivatives such as e.g. poly(2-methoxy,5-3',7'-dimethyloctyloxy)-1,4-phenylene vinylene (MDMO-PPV or OC₁C₁₀PPV), or on poly(p-thienylene vinylene) derivatives.

The precursor polymer may be synthesized according to the method described in the first aspect of this invention. In one embodiment of the second aspect of this invention, the duration of the subjecting step may be lower than 24 hours, lower than 8 hours and preferably lower than 3 hours.

In an embodiment of the first aspect of the invention, the Ar group may be an aromatic divalent group with 4 to 20 carbon atoms which may be substituted with one or more substituents independently selected from the group consisting of C₁-C₂₀-alkyl, C₃-C₂₀-alkoxy, C₁-C₂₀-alkylsulfate, poly(ethylene oxide) (PEO), poly(ethylene glycol) (PEG), a phenyl group or a benzyl group. These Ar groups may comprise up to 4 heteroatoms chosen from the group comprising oxygen, sulphur, and nitrogen in the aromatic divalent group. Furthermore, these groups may independently be linear, or cyclic or two of these groups may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4 thienylene; 2,3 thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar is 1,4-phenylene or 2,5-thienylene and most preferably Ar is 2,5-thienylene.

The conjugated arylene or heteroarylene vinylene polymers may be obtained by thermal conversion of the precursor polymer in which the remaining dithiocarbamate group acts as a leaving group (or evaporating group). The conjugated polymer may show a low structural defect level.

In a preferred embodiment, R₁ and R₂ may be a C₁-C₂₀-alkyl group. In another embodiment, R₁ and R₂ may be selected from the group consisting of methyl, ethyl or propyl.

In a preferred embodiment, R₁ and R₂ may be a C₁-C₂₀-alkyl. In another embodiment, R₁ and R₂ may be selected from the group consisting of methyl, ethyl, propyl or phenyl. In another preferred embodiment, R₃ and R₄ may be hydrogen.

In a preferred embodiment, said conjugated arylene vinylene polymer is poly (2,5 thienylene vinylene) and its derivatives.

In a further embodiment of the second aspect of this invention the precursor polymer may be dissolved in an organic or non-organic solvent and the conversion reaction or elimination reaction may be performed in solution by thermal treatment under inert or controlled atmosphere to lead to a soluble or insoluble conjugated polymer. This method may in generally be used when the conjugated polymer is expected to be soluble in organic and/or non-organic solvents. In a further embodiment according this second aspect of this invention the precursor polymer may be in the form of a thin film precursor polymer layer and the conversion or elimination reaction step may be performed under inert or controlled atmosphere or under vacuum by in situ thermal treatment.

In a further embodiment of the second aspect of this invention, the precursor polymer may be dissolved in a solvent, followed by a degassing step.

In a further embodiment of the second aspect of this invention, the thermal conversion step may be performed at a temperature between 30°C and 300°C, preferably between 80°C and 300°C, and most preferably between 115°C and 250°C.

In a further embodiment of the second aspect of this invention the yield of the method may be between 30% and 90%.

Compared to the Wessling route, the method of the present invention has the advantage of leading to polymerisation without gel formation and requiring no toxic gas (like strong acids) during the conversion reaction.

Compared to the Gilch route, this invention has the advantages of leading to polymers that can also be insoluble in their conjugated form. The Gilch route is a one-pot polymerisation, which only allows the synthesis of soluble conjugated polymers; it is not a precursor route as is the case in the present invention.

Compared to the sulfinyl route, this invention has the advantages of leading to stable monomers.

Compared to the Hsieh method (U.S. patent 5,817,430), the method in this invention does not require the use of chain end controlling additives to control the molecular weight in order to get soluble conjugated polymers. Contrary to the Hsieh method, which is a side chain approach, the method according to the present invention is a "precursor method" which does not require control of the molecular weight. The resulting precursor polymers are always soluble polymers, whatever their molecular weight is and are soluble even for very high molecular weight. The related conjugated polymer may be obtained in a second step by a conversion or elimination reaction under thermal treatment to lead to soluble or insoluble conjugated polymers. When the conjugated polymer is expected to be insoluble, the elimination reaction may preferably be carried out in thin film. When the conjugated polymer is expected to be soluble, the elimination reaction may be carried out either in solution or in thin film.

Precursor polymers synthesised from a monomer having a symmetrical structure may be much easier to synthesise and to obtain in good yield. No complicated purification step by chromatography column of the monomer is requested.

Precursor polymers with leaving groups (e.g. dithiocarbamate) are compatible with a device application. The lifetime of the device is not influenced by remaining traces of leaving groups in the active layer after the conversion reaction.

During the conversion step, the leaving groups of the precursor polymers are eliminated and double bonds of the conjugated polymer are formed. In one embodiment according to the invention, substantially all of the leaving groups are eliminated, thus forming a fully converted conjugated polymer. However, in another embodiment according to the invention, only between 90 and 100% of the leaving groups may be eliminated. Hence, between 0 and 10% of the leaving groups is still present in the resulting conjugated polymer. Thus, the resulting polymer is only partially converted. This polymer will be referred to as partially converted conjugated polymer. The amount of remaining leaving groups in the partially converted conjugated polymer may be controlled by changing the experimental circumstances of the conversion reaction.

Compared to the bis-sulfide route (EP 1 290 059 A1), the method of the present invention has the advantage of leading to polymers by means of polymerisation of monomers which are much more stable and therefore allow the synthesis of polymers for which the instability of the monomers can be a problem to obtain such polymer in a reliable way. In the bis-sulfide route, over-oxidation can occur easily as the oxidation of the sulfide groups is carried out after polymerisation and not on the starting monomer. Structural defects have a negative effect on the charge mobility of conjugated polymers

Compared to the bis-xanthate route, this invention has the advantages of leading to :
- monomers and soluble precursor polymers stable in time in inert atmosphere.
- precursors and conjugated polymers with a much lower polydispersity around 2 to 3 (while being between 20 and 30 for the xanthate-route).
- reproducibility between batches.
- precursor polymers obtained through polymerisation reaction carried out at a temperature ranging from -78°C to 30°C.
- the yield of the polymerisation reaction is higher than 50%.
- conjugated polymers with low defect level.
- polymers with an increase of λₘₐₓ of about 20 nm for a PTV derivative at room temperature synthesised according to the present invention, compared to the same PTV derivative synthesised via another method. For example, poly(2,5-thienylene vinylene), having no substituent on Ar, has a λₘₐₓ value around 545 nm for PTV at high temperature and 570 nm at room temperature when synthesised according to the method of the present invention compared to the same poly(2,5-thienylene vinylene) having no substituents on Ar which has a λₘₐₓ value around 500-520 nm at high temperature when synthesised via the xanthate-route and the λₘₐₓ value may be varied from batch to batch.
- large-scale synthesis is possible.

Furthermore, the present invention provides a method for the preparation of a polymer comprising the structural units: 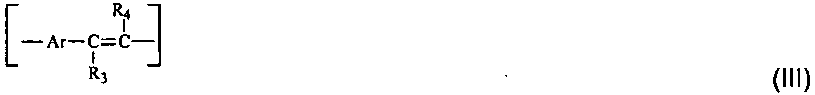 wherein Ar is an aromatic group or an heteroaromatic divalent group, wherein R₃ and R₄ are independently from each other hydrogen or an organic group selected from the group consisting of a C₁-C₂₀-alkyl group, a cyclic C₃-C₂₀-alkyl group, an aryl group, an alkylaryl group, an arylalkyl group and a heterocyclic group, and wherein n is an integer from 5 to 2000 and which are formed with the method according to the present invention.

In a preferred embodiment, Ar comprises 4 to 20 carbon atoms. In another embodiment, the Ar groups may be substituted with a substituent chosen from the group consisting of a C₁-C₂₀-alkyl, C₃-C₂₀-alkoxy, C₁-C₂₀-alkylsulfate, poly(ethylene oxide) (PEO), poly(ethylene glycol) (PEG), a phenyl or a benzyl group and the Ar groups may comprise up to 4 heteroatoms chosen from the group comprising oxygen, sulphur, and nitrogen in the aromatic cyclic system.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

All possible combination of Ar, R₀, R₁, R₂, R₃ and R₄ are included in this invention.

The conjugated polymers, prepared according to a method described in the previous embodiments has less defects with respect to the prior art.

In a specific, preferred embodiment according to the invention, the conjugated arylene or heteroarylene vinylene polymer is a poly(2,5-thienylene vinylene) or PTV polymer with formula:

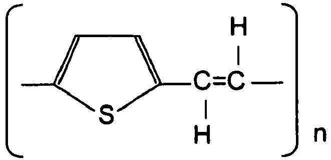

Due to the fact that the polymer is prepared by the method as described in the present invention, the poly(2,5-thienylene vinylene) polymer according to the invention shows a peak at a wavelength higher than 520 nm in the absorption spectrum.

In another embodiment according to the invention, also other PTV derivatives, which have side chains on the 2 and 3 positions (instead of on the 2 and 5 positions in the previous embodiment) on the thiophene ring may be used.

In a preferred embodiment, the polymer may be characterized by a peak at a wavelength higher than 540 nm in the absorption spectrum.

The average molecular weight of the polymer prepared according to the invention may be between 5000 daltons and 500000 daltons, whereas the polydispersity may be between 1.5 and 5.5. Furthermore, the polymer prepared according to the present invention may be a linear polymer.

The method according to the present invention does not require the use of a chain end controlling additive.

In an embodiment according to the invention at least two monomers having formula (I) may be polymerised together to form a copolymer.

The invention further relates to a method of manufacturing bilayer heterojunction organic solar cells using a soluble precursor polymer containing structural units of formula (II). The active layer made from the soluble precursor polymer may become effectively active only after conversion reaction towards the related soluble or insoluble conjugated polymer by an elimination reaction under heat treatment in situ in thin film.

Furthermore, the invention relates to a method of manufacturing organic bulk heterojunction solar cells using as an active layer a blend of an n-type material, such as a soluble C₆₀ derivatives, and a p-type material, such as a precursor polymer containing structural units of formula (II). The active layer made from the n-type/p-type material blend may become an active layer only after the conversion reaction of the thin film by heat treatment.

The invention further relates to a method of manufacturing organic transistors using a polymer containing structural units of formula (II). The active layer made from the soluble precursor polymer may become effectively active only after conversion reaction towards the soluble or insoluble conjugated polymer by elimination reaction of the leaving groups and formation of the vinylene double bonds by heat treatment.

In a fourth aspect of this invention, a method for manufacturing an electronic device is disclosed. The electronic device comprises a polymer layer. In the method according to the present invention, a layer comprising the soluble precursor polymer (II) is deposited. In a next step, the conjugated polymer (III) layer is obtained by carrying out the conversion reaction of the coated soluble precursor polymer layer towards the active soluble or insoluble conjugated polymer by elimination of the leaving groups and formation of the vinylene doubled bonds induced by heat treatment.

On the active soluble or insoluble conjugated polymer layer a further annealing treatment may be carried out in order to remove stresses of the polymer chains introduced during the deposition of the thin film layer and in order to induce a relaxation of the polymer chains and changes in the polymer film morphology. This annealing may be carried out before or after the electrode deposition on top of the active conjugated polymer layer.

These and other characteristics, features and advantages of the present invention will become apparent from the following detailed description.

### Definitions

As used herein with respect to a substituting radical, and unless otherwise stated, the terms " C₁₋₇ alkyl" or " aliphatic saturated hydrocarbon radicals with 1 to 7 carbon atoms " means straight and branched chain saturated acyclic hydrocarbon monovalent radicals having from 1 to 7 carbon atoms such as, for example, methyl, ethyl, propyl, n-butyl, 1-methylethyl (isopropyl), 2-methylpropyl (isobutyl), 1,1-dimethylethyl (ter-butyl), 2-methyl-butyl, n-pentyl, dimethylpropyl, n-hexyl, 2-methylpentyl, 3-methylpentyl, n-heptyl and the like; the term " C₁₋₄ alkyl designate the corresponding radicals with only 1 to 4 carbon atoms, and so on.

As used herein with respect to a substituting radical, and unless otherwise stated, the term " C₁₋₇ alkylene " means the divalent hydrocarbon radical corresponding to the above defined C₁₋₇ alkyl, such as methylene, bis(methylene), tris(methylene), tetramethylene, hexamethylene and the like.

As used herein with respect to a substituting radical, and unless otherwise stated, the terms " C₃₋₁₀ cycloalkyl" and " cycloaliphatic saturated hydrocarbon radical with 3 to 10 carbon atoms " mean a mono- or polycyclic saturated hydrocarbon monovalent radical having from 3 to 10 carbon atoms, such as for instance cyclopropyl, cyclobutyl, cyclopentyl, cyclohexyl, cycloheptyl, cyclooctyl and the like, or a C₇₋₁₀ polycyclic saturated hydrocarbon monovalent radical having from 7 to 10 carbon atoms such as, for instance, norbornyl, fenchyl, trimethyltricycloheptyl or adamantyl.

As used herein with respect to a substituting radical, and unless otherwise stated, the terms " aryl " and "aromatic substituent " are interchangeable and designate any mono- or polycyclic aromatic monovalent hydrocarbon radical having from 6 up to 30 carbon atoms such as but not limited to phenyl, naphthyl, anthracenyl, phenantracyl, fluoranthenyl, chrysenyl, pyrenyl, biphenylyl, terphenyl, picenyl, indenyl, biphenyl, indacenyl, benzocyclobutenyl, benzocyclooctenyl and the like, including fused benzo-C₄₋₈ cycloalkyl radicals (the latter being as defined above) such as, for instance, indanyl, tetrahydronaphtyl, fluorenyl and the like, all of the said radicals being optionally substituted with one or more substituents selected from the group consisting of halogen, amino, nitro, hydroxyl, sulfhydryl and nitro, such as for instance 4-fluorophenyl, 4-chlorophenyl, 3,4-dichlorophenyl, 4-cyanophenyl.

As used herein with respect to a substituting radical (including the combination of two substituting radicals), and unless otherwise stated, the term " heterocyclic " means a mono- or polycyclic, saturated or mono-unsaturated or polyunsaturated monovalent hydrocarbon radical having from 2 up to 15 carbon atoms and including one or more heteroatoms in one or more heterocyclic rings, each of said rings having from 3 to 10 atoms (and optionally further including one or more heteroatoms attached to one or more carbon atoms of said ring, for instance in the form of a carbonyl or thiocarbonyl or selenocarbonyl group, and/or to one or more heteroatoms of said ring, for instance in the form of a sulfone, sulfoxide, N-oxide, phosphate, phosphonate or selenium oxide group), each of said heteroatoms being independently selected from the group consisting of nitrogen, oxygen, sulfur, selenium and phosphorus, also including radicals wherein a heterocyclic ring is fused to one or more aromatic hydrocarbon rings for instance in the form of benzo-fused, dibenzo-fused and naphto-fused heterocyclic radicals; within this definition are included heterocyclic radicals such as, but not limited to, diazepinyl, oxadiazinyl, thiadiazinyl, dithiazinyl, triazolonyl, diazepinonyl, triazepinyl, triazepinonyl, tetrazepinonyl, benzoquinolinyl, benzothiazinyl, benzothiazinonyl, benzoxathiinyl, benzodioxinyl, benzodithiinyl, benzoxazepinyl, benzo-thiazepinyl, benzodiazepinyl, benzodioxepinyl, benzodithiepinyl, benzoxazocinyl, benzothiazocinyl, benzodiazocinyl, benzoxathiocinyl, benzo-dioxocinyl, benzotrioxepinyl, benzoxathiazepinyl, benzoxadiazepinyl, benzothiadiazepinyl, benzotriazepinyl, benzoxathiepinyl, benzotriazinonyl, benzoxazolinonyl, azetidinonyl, azaspiroundecyl, dithiaspirodecyl, selenazinyl, selenazolyl, selenophenyl, hypoxanthinyl, azahypoxanthinyl, bipyrazinyl, bipyridinyl, oxazolidinyl, diselenopyrimidinyl, benzodioxocinyl, benzopyrenyl, benzopyranonyl, benzophenazinyl, benzoquinolizinyl, dibenzocarbazolyl, dibenzoacridinyl, dibenzophenazinyl, dibenzothiepinyl, dibenzooxepinyl, dibenzopyranonyl, dibenzoquinoxalinyl, dibenzothiazepinyl, dibenzoisoquinolinyl, tetraazaadamantyl, thiatetraazaadamantyl, oxauracil, oxazinyl, dibenzothiophenyl, dibenzofuranyl, oxazolinyl, oxazolonyl, azaindolyl, azolonyl, thiazolinyl, thiazolonyl, thiazolidinyl, thiazanyl, pyrimidonyl, thiopyrimidonyl, thiamorpholinyl, azlactonyl, naphtindazolyl, naphtindolyl, naphtothiazolyl, naphtothioxolyl, naphtoxindolyl, naphtotriazolyl, naphtopyranyl, oxabicycloheptyl, azabenzimidazolyl, azacycloheptyl, azacyclooctyl, azacyclononyl, azabicyclononyl, tetrahydrofuryl, tetrahydropyranyl, tetrahydropyronyl, tetrahydroquinoleinyl, tetrahydrothienyl and dioxide thereof, dihydrothienyl dioxide, dioxindolyl, dioxinyl, dioxenyl, dioxazinyl, thioxanyl, thioxolyl, thiourazolyl, thiotriazolyl, thiopyranyl, thiopyronyl, coumarinyl, quinoleinyl, oxyquinoleinyl, quinuclidinyl, xanthinyl, dihydropyranyl, benzodihydrofuryl, benzothiopyronyl, benzothiopyranyl, benzoxazinyl, benzoxazolyl, benzodioxolyl, benzodioxanyl, benzothiadiazolyl, benzotriazinyl, benzothiazolyl, benzoxazolyl, phenothioxinyl, phenothiazolyl, phenothienyl (benzothiofuranyl), phenopyronyl, phenoxazolyl, pyridinyl, dihydropyridinyl, tetrahydropyridinyl, piperidinyl, morpholinyl, thiomorpholinyl, pyrazinyl, pyrimidinyl, pyridazinyl, triazinyl, tetrazinyl, triazolyl, benzotriazolyl, tetrazolyl, imidazolyl, pyrazolyl, thiazolyl, thiadiazolyl, isothiazolyl, oxazolyl, oxadiazolyl, pyrrolyl, furyl, dihydrofuryl, furoyl, hydantoinyl, dioxolanyl, dioxolyl, dithianyl, dithienyl, dithiinyl, thienyl, indolyl, indazolyl, benzofuryl, quinolyl, quinazolinyl, quinoxalinyl, carbazolyl, phenoxazinyl, phenothiazinyl, xanthenyl, purinyl, benzothienyl, naphtothienyl, thianthrenyl, pyranyl, pyronyl, benzopyronyl, isobenzofuranyl, chromenyl, phenoxathiinyl, indolizinyl, quinolizinyl, isoquinolyl, phthalazinyl, naphthiridinyl, cinnolinyl, pteridinyl, carbolinyl, acridinyl, perimidinyl, phenanthrolinyl, phenazinyl, phenothiazinyl, imidazolinyl, imidazolidinyl, benzimidazolyl, pyrazolinyl, pyrazolidinyl, pyrrolinyl, pyrrolidinyl, piperazinyl, uridinyl, thymidinyl, cytidinyl, azirinyl, aziridinyl, diazirinyl, diaziridinyl, oxiranyl, oxaziridinyl, dioxiranyl, thiiranyl, azetyl, dihydroazetyl, azetidinyl, oxetyl, oxetanyl, thietyl, thietanyl, diazabicyclooctyl, diazetyl, diaziridinonyl, diaziridinethionyl, chromanyl, chromanonyl, thiochromanyl, thiochromanonyl, thiochromenyl, benzofuranyl, benzisothiazolyl, benzocarbazolyl, benzochromonyl, benzisoalloxazinyl, benzocoumarinyl, thiocoumarinyl, phenometoxazinyl, phenoparoxazinyl, phentriazinyl, thiodiazinyl, thiodiazolyl, indoxyl, thioindoxyl, benzodiazinyl (e.g. phtalazinyl), phtalidyl, phtalimidinyl, phtalazonyl, alloxazinyl, dibenzopyronyl (i.e. xanthonyl), xanthionyl, isatyl, isopyrazolyl, isopyrazolonyl, urazolyl, urazinyl, uretinyl, uretidinyl, succinyl, succinimido, benzylsultimyl, benzylsultamyl and the like, including all possible isomeric forms thereof, wherein each carbon atom of said heterocyclic ring may be independently substituted with a substituent selected from the group consisting of halogen, nitro, C₁₋₇ alkyl (optionally containing one or more functions or radicals selected from the group consisting of carbonyl (oxo), alcohol (hydroxyl), ether (alkoxy), acetal, amino, imino, oximino, alkyloximino, amino-acid, cyano, carboxylic acid ester or amide, nitro, thio C₁₋₇ alkyl, thio C₃₋₁₀ cycloalkyl, C₁₋₇ alkylamino, cycloalkylamino, alkenylamino, cycloalkenylamino, alkynylamino, arylamino, arylalkylamino, hydroxylalkylamino, mercaptoalkylamino, heterocyclic amino, hydrazino, alkylhydrazino, phenylhydrazino, sulfonyl, sulfonamido and halogen), C₂₋₇ alkenyl, C₂₋₇ alkynyl, halo C₁₋₇ alkyl, C₃₋₁₀ cycloalkyl, aryl, arylalkyl, alkylaryl, alkylacyl, arylacyl, hydroxyl, amino, C₁₋₇ alkylamino, cycloalkylamino, alkenylamino, cyclo-alkenylamino, alkynylamino, arylamino, arylalkylamino, hydroxyalkylamino, mercaptoalkylamino, heterocyclic amino, hydrazino, alkylhydrazino, phenylhydrazino, sulfhydryl, C₁₋₇ alkoxy, C₃₋₁₀ cycloalkoxy, aryloxy, arylalkyloxy, oxyheterocyclic, heterocyclic-substituted alkyloxy, thio C₁₋₇ alkyl, thio C₃₋₁₀ cycloalkyl, thioaryl, thioheterocyclic, arylalkylthio, heterocyclic-substituted alkylthio, formyl, hydroxylamino, cyano, carboxylic acid or esters or thioesters or amides thereof, thiocarboxylic acid or esters or thioesters or amides thereof; depending upon the number of unsaturations in the 3 to 10 membered ring, heterocyclic radicals may be sub-divided into heteroaromatic (or " heteroaryl") radicals and non-aromatic heterocyclic radicals; when a heteroatom of the said non-aromatic heterocyclic radical is nitrogen, the latter may be substituted with a substituent selected from the group consisting of C₁₋₇ alkyl, C₃₋₁₀ cycloalkyl, aryl, arylalkyl and alkylaryl.

As used herein with respect to a substituting radical, and unless otherwise stated, the terms " C₁₋₇ alkoxy ", "C₃₋₁₀ cycloalkoxy ", " aryloxy", "arylalkyloxy ", " oxyheterocyclic ", "thio C₁₋₇ alkyl", " thio C₃₋₁₀ cycloalkyl ", " arylthio ", " arylalkylthio " and " thioheterocyclic" refer to substituents wherein a C₁₋₇ alkyl radical, respectively a C₃₋₁₀ cycloalkyl, aryl, arylalkyl or heterocyclic radical (each of them such as defined herein), are attached to an oxygen atom or a divalent sulfur atom through a single bond, such as but not limited to methoxy, ethoxy, propoxy, butoxy, pentoxy, isopropoxy, sec-butoxy, tert-butoxy, isopentoxy, cyclopropyloxy, cyclobutyloxy, cyclopentyloxy, thiomethyl, thioethyl, thiopropyl, thiobutyl, thiopentyl, thiocyclopropyl, thiocyclobutyl, thiocyclopentyl, thiophenyl, phenyloxy, benzyloxy, mercaptobenzyl, cresoxy, and the like.

As used herein with respect to a substituting atom, and unless otherwise stated, the term halogen means any atom selected from the group consisting of fluorine, chlorine, bromine and iodine.

As used herein with respect to a substituting radical, and unless otherwise stated, the terms " arylalkyl ", " arylalkenyl " and "heterocyclic-substituted alkyl" refer to an aliphatic saturated or unsaturated hydrocarbon monovalent radical (preferably a C₁₋₇ alkyl or C₂₋₇ alkenyl radical such as defined above) onto which an aryl or heterocyclic radical (such as defined above) is already bonded, and wherein the said aliphatic radical and/or the said aryl or heterocyclic radical may be optionally substituted with one or more substituents selected from the group consisting of halogen, amino, nitro, hydroxyl, sulfhydryl and nitro, such as but not limited to benzyl, 4-chlorobenzyl, phenylethyl, 1-amino-2-phenylethyl, 1-amino-2-[4-hydroxyphenyl]ethyl, 1-amino-2-[indol-2-yl]ethyl, styryl, pyridylmethyl, pyridylethyl, 2-(2-pyridyl)isopropyl, oxazolylbutyl, 2-thienylmethyl and 2-furylmethyl.

### Description of illustrative embodiments

The present invention will be described with respect to particular embodiments but the invention is not limited thereto but only by the claims.

It is to be noticed that the term "comprising", used in the claims, should not be interpreted as being restricted to the means listed thereafter; it does not exclude other elements or steps.. Thus, the scope of the expression "a device comprising means A and B" should not be limited to devices consisting only of components A and B. It means that with respect to the present invention, the only relevant components of the device are A and B.

The compounds referred to in the detailed description may be selected from the compounds described in the following list :
Compound (I) having the general formula : 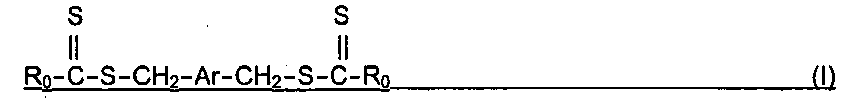 wherein Ar may be an aromatic or heteroaromatic divalent group. In a preferred embodiment, Ar may comprise 4 to 20 carbon atoms. In another embodiment, each of the Ar groups may be substituted with one or more substituents independently selected from the group consisting of C₁-C₂₀-alkyl, C₃-C₂₀-alkoxy, C₁-C₂₀-alkylsulfate, oligo or poly(ethylene oxide) (PEO), oligo or poly(ethylene glycol) (PEG), a phenyl group or a benzyl group. These Ar groups may comprise up to 4 heteroatoms chosen from the group comprising oxygen, sulphur, and nitrogen in the aromatic cyclic system. The substituents on Ar groups may be independently linear, or cyclic, or two of these substituents may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be1,4-phenylene or 2,5-thienylene and most preferably Ar may be 2,5-thienylene.

R₀ may be selected from the group consisting of an amine -NR₁R₂, an aryloxy group, an alkyl group, an aryl group, an alkylaryl group, an arylalkyl group, a thioether group, an ester group, an acid carboxylic group.

In a preferred embodiment, R₀ may be an amine -NR₁R₂, in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R₁ and R₂ may be linked together to form a cycle. Preferably, R₁ and R₂ may be independently selected from a methyl group, an ethyl group, a propyl group, a phenyl group and a benzyl group. The alkyl group, phenyl group and benzyl group may comprise heteroatoms and substituents.

Compound (II) having the general formula: 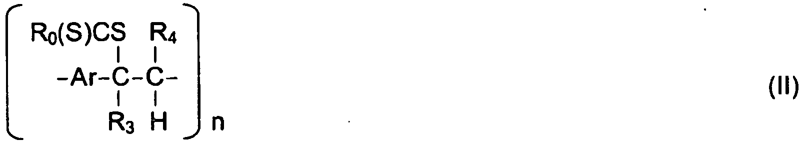 wherein Ar may be an aromatic or heteroaromatic divalent group. In a preferred embodiment, Ar may comprise 4 to 20 carbon atoms. In another embodiment, each of the recited Ar groups may be substituted with one or more independently selected substituents chosen from the group consisting of a C₁-C₂₀-alkyl, C₃-C₂₀-alkoxy, C₁-C₂₀-alkylsulfate, oligo or poly(ethylene oxide) (PEO), oligo or poly(ethylene glycol) (PEG),a phenyl or a benzyl group and these Ar groups may comprise up to 4 heteroatoms chosen from the group comprising oxygen, sulphur, and nitrogen in the aromatic cyclic system. The substituents on the Ar groups may be independently linear, or cyclic, or two of these groups may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

R₀ may be selected from the group consisting of an amine -NR₁R₂, an aryloxy group, an alkyl group, an aryl group, an alkylaryl group, an arylalkyl group, a thioether group, an ester group, an acid carboxylic group.

In a preferred embodiment, R₀ may be an amine -NR₁R₂, 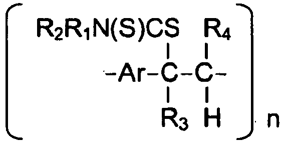 in which R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group, R₁ and R₂ may be linked together to form a cycle. Preferably, R₁ and R₂ may be independently selected from a methyl group, an ethyl group, a propyl group, a phenyl group and a benzyl group. The alkyl group, phenyl group and benzyl group may comprise heteroatoms and substituents. One typical example of such a precursor polymer may be a precursor polymer wherein R₀ = -NR₁R₂ and wherein R₁=R₂=Et

In other specific examples of precursor polymers which may be used 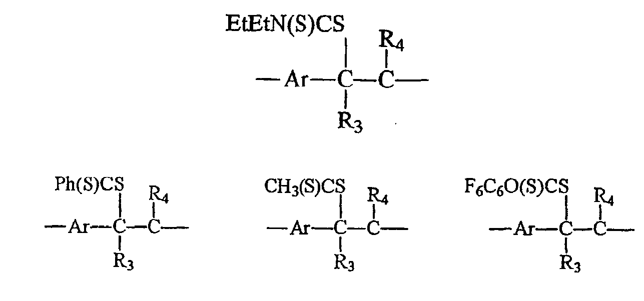 according to embodiments of the invention, R₀ may be a phenyl group (Ph), a methyl group (CH₃) or a group (F₆C₆O):

In other specific examples according to the invention, precursor polymers may be based on poly(p-phenylene vinylene) derivatives, such as for example alkoxy poly(p-phenlyne vinylene) (alkoxy-PPV) derivatives such as e.g. poly(2-methoxy,5-3',7'-dimethyloctyloxy)-1,4-phenylene vinylene (MDMO-PPV or OC₁C₁₀PPV), or on poly(p-thienylene vinylene) (PTV) derivative, and R₃ and R₄ may be chosen from the group comprising a hydrogen atom, a C₁-C₂₀-alkyl group, a cyclic C₄-C₂₀-alkyl group, a phenyl group and a benzyl group, which groups may comprise heteroatoms and substituents. In a preferred embodiment, R₃ and R₄ may be hydrogen.

### Compound (III) having the general formula :

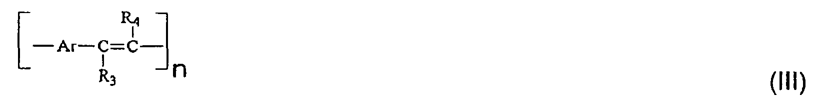

wherein Ar may be an aromatic or heteroaromatic divalent group. In a preferred embodiment, Ar comprises 4 to 20 carbon atoms. In another embodiment, each of the Ar groups may be substituted with one or more independently selected substituents chosen from the group consisting of a C₁-C₂₀-alkyl, C₃-C₂₀-alkoxy, C₁-C₂₀-alkylsulfate, oligo or poly(ethylene oxide) (PEO), oligo or poly(ethylene glycol) (PEG),a phenyl or a benzyl group and these Ar groups may comprise up to 4 heteroatoms chosen from the group comprising oxygen, sulphur, and nitrogen in the aromatic divalent group. The substituents on Ar groups may be independently linear, or cyclic, or two of these substituents may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

R₃ and R₄ may be chosen from the group comprising a hydrogen atom and a C₁-C₂₀-alkyl group, a cyclic C₄-C₂₀-alkyl group, a phenyl group and a benzyl group, which groups may comprise heteroatoms and substituents. In a preferred embodiment, R₃ and R₄ may be hydrogen.

### Compound (IV) having the general formula :

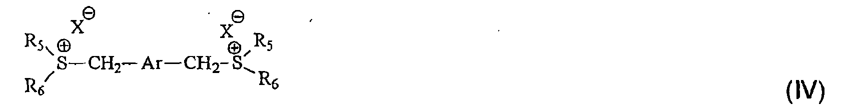

wherein Ar may be an aromatic or heteroaromatic divalent group. In a preferred embodiment, Ar may comprise 4 to 20 carbon atoms. In another embodiment, each of the Ar groups may be substituted with one or more substituents independently chosen from the group consisting of a C₁-C₂₀-alkyl, C₃-C₂₀-alkoxy, C₁-C₂₀-alkylsulfate, oligo or poly(ethylene oxide) (PEO), oligo or poly(ethylene glycol) (PEG), a phenyl or a benzyl group and these Ar groups may comprise up to 4 heteroatoms chosen from the group comprising oxygen, sulphur, and nitrogen in the aromatic cyclic system. The substituents on the Ar groups may be independently linear, or cyclic, or two of these substituents may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

X may be selected from the group consisiting of CI, Br or F.

R₅ and R₆ may be selected from the group consisting of a C₁-C₂₀-alkyl group, a cyclic C₄-C₂₀-alkyl group, a phenyl group and a benzyl group, which groups may comprise heteroatoms and substituents.

Compound (V) having the general formula

Y-Ar-Y (V)

wherein Y may comprise chloromethyl, bromomethyl or fluoromethyl atoms and wherein Ar may be an aromatic or heteroaromatic divalent group. In a preferred embodiment, Ar may comprise 4 to 20 carbon atoms. In another embodiment, each of the Ar groups may be substituted with one or more substituents independently chosen from the group consisting of a C₁-C₂₀-alkyl, C₃-C₂₀-alkoxy, C₁-C₂₀-alkylsulfate, oligo or poly(ethylene oxide) (PEO), oligo or poly(ethylene glycol) (PEG), a phenyl or a benzyl group and these Ar groups may comprise up to 4 heteroatoms chosen from the group comprising oxygen, sulphur, and nitrogen in the aromatic cyclic system. The substituents on the Ar groups may be independently linear, or cyclic, or two of these substituents may be linked together to form a cycle on the Ar group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

### Compound (VI) having the general formula :

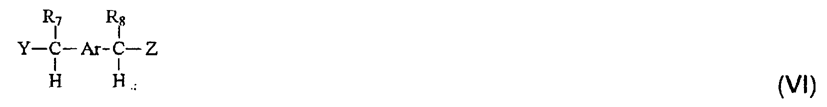

wherein Z may be a leaving group. in a preferred embodiment, Z may be selected from the group consisting of CI, Br, I, -O-Tos, -O-Mes, -O-Triflates, -(NR₁ R₁ R₁)⁺, -(SR₁R₂)⁺, -OOCR₁ and -SC(S)OR₁. In the above formula, Y may be a polarizer group and may be selected form the group consisting of -SR₁, -OR₁, -OH, -CI, -Br, -SO-R₁, -CN, -CO-OR₁ and -S-C(S)OR₁, R₇ and R₈ may independently be -H, R₁, and Ar may be an aromatic or heteroaromatic divalent group. In a preferred embodiment, Ar may comprise 4 to 20 carbon atoms. In another embodiment, each of the Ar groups may be substituted with one or more substituents independently chosen from the group consisting of a C₁-C₂₀-alkyl, C₃-C₂₀-alkoxy, C₁-C₂₀-alkylsulfate, oligo or poly(ethylene oxide) (PEO), oligo or poly(ethylene glycol) (PEG), a phenyl or a benzyl group and these Ar groups may comprise up to 4 heteroatoms chosen from the group comprising oxygen, sulphur, and nitrogen in the aromatic divalent group.

In a further embodiment, the aromatic or heteroaromatic divalent group may be selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl. Preferably, Ar may be 1,4-phenylene or 2,5-thienylene and most preferably Ar may be 2,5-thienylene.

R₁, R₂, R₃ may be equal to R₁, R₂, R₃ as defined for compound (II).

In a first aspect of the present invention, the synthesis of a soluble precursor polymer (II) starting from the monomer (I) is provided. The present invention also provides the synthesis of monomer (I). The second aspect of the invention comprises the conversion reaction of the soluble precursor polymer to the related conjugated polymer which may be soluble or insoluble depending on the chemical structure. The method according to the present invention does not require the use of chain end controlling agents during the polymerisation reaction as the obtained precursor polymers are always soluble whatever the Ar groups are.

Furthermore, the present invention comprises the manufacturing of an active layer from the precursor polymer. The last step of the invention is the electronic device made from the precursor polymer followed by its conversion reaction towards the conjugated polymer as pristine material or in blend.

The first aspect thus provides the synthesis of a soluble precursor polymer (II). Therefore, first a monomer has to be provided. Therefore, as an example and not limiting to the invention, a dithiocarbamic acid sodium salt is added in the solid state to an aromatic or heteroaromatic ring structure of the general formula of compound (IV) or to an aromatic or heteroaromatic ring structure with general formula of compound (V) in a mixture of organic solvents. After stirring a few hours at room temperature, the reaction product may be extracted with for example ether and dried over magnesium sulphate. The product of that reaction is an arylene or heteroarylene group bearing two dithiocarbamate groups in para positions as described in formula (I).

Mono- and bis-dithiocarbamate molecules may in this invention be used as photoiniferters. An example of such a bifunctional iniferter is p-xylylene bis(N,N-diethyl dithiocarbamate). It was first synthesised in 1984 by Otsu et al (T. Otsu, A. Kuriyama, Polym. Bull. 1984, 11, 2, 135), and was used for the living radical polymerisation of styrene and methyl methacrylate. Otsu wrote an extensive review on the iniferter concept and living radical polymerisation (T. Otsu, J. Polym. Sci., Part A: Polym. Chem. 2000, 38, 12, 2121). The use of p-xylylene bis(N,N-diethyl dithiocarbamate) as a monomer in a polymerisation process was not found.

The synthesis of thiophene-2,5-diylbismethylene N,N-diethyl thiocarbamate was patented by Nishiyama et al. in 1975 for its herbicidal activities (Jpn. Tokkyo Koho, No 50004732, 1975), but again no report exists on the use of the dithiocarbamate "thiophene" analogue as a monomer for polymerisation to soluble precursor polymers which may be converted by thermal elimination (leaving groups eliminated) towards the conjugated semiconductors, which may be soluble or insoluble, depending on their chemical structure.

According to the first aspect of the invention the monomer having the general formula (I) is reacted with a basic compound in the presence of an organic solvent to obtain the soluble precursor polymer (II), wherein the amount of said basic compound is between 1 and 2 equivalents with respect to the monomer.- It has to be noted that, according to the invention, no chain end controlling agents are required to obtain this soluble precursor polymer (II).

A mixture of different starting monomers of formula (I) may be reacted by using the above method, leading to copolymers. Alternatively, a mixture of different starting monomers of formula (I) and of formula (VI) may be polymerised by using this method leading to copolymers. Those copolymers may then be used as polyiniferters in iniferter controlled free-radical polymerisation to the synthesis of block copolymers and grafted polymers.

The precursor polymers in accordance with the formula (II), that may be prepared by the invention, preferably may comprise as the Ar group an aromatic or heteroaromatic group chosen from 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl; carbazole-2,7-diyl, of which the nitrogen-containing groups may be substituted on the nitrogen atom with a C₁-C₂₂-alkyl or a C₂-C₁₀-aryl group, while in all groups the R atoms on the aromatic rings may be substituted by a C₁-C₂₂ linear, cyclic or branched alkyl group, C₄-C₁₄ aryl group, electron-donating groups such as C₁ -C₂₂ alkoxy and alkylthio groups, and halogen atoms or electron-attracting groups such as cyano, nitro, and ester groups, while the C₁-C₁₄ aryl group itself may be substituted by electron-donating or electron-attracting groups.

The basic compound may be a metal base, an ammonium base or a non-charged base such as amines like for example triethylamine, pyridine and non-ionic phosphazene bases. The metal in these basic compounds may preferably be an alkaly metal or an alkaly earth metal, i.e. a metal from group I or II. Classes of metal and ammonium bases are metal hydrides, such as NaH or KH, metal hydroxides, such as NaOH, LiOH or KOH, metal alkoxides, such as NaOMe or NaOEt; KotBu; metal amines such as a lithium-ammonia solution, a sodium-ammonia solution, lithium in methylamine; metal amides, such as NaNH₂, NaN(SiMe₃)₂, lithiumdiisopropylamide (LDA), organometal compounds wherein the metal is an alkaly metal or alkaly earth metal, such as for example a C₁₋₂₀ alkyl lithium (e.g. n-BuLi) or a C₁₋₂₀ alkyl sodium, Grignard reagents, and ammonium hydroxides. Grignard reagents are organic magnesium halides preferably dissolved in a non-reactive solvent (typically dry ethyl ether). The substance is made up of an organic group, e.g. an alkyl or aryl group, joined by a highly polar covalent bond to magnesium, while the magnesium is joined by an ionic bond to a halogen ion e.g. bromide or iodide.

The amount of basic compound may vary from 1 to 2 equivalents with respect to the starting monomer. It may be preferred to use one equivalent of basic compound because a too high concentration of basic compound may induce an in situ conversion reaction during the polymerisation.

In polar aprotic solvents it is preferred to use metal hydrides as they show substantially no nucleophilic properties. In polar protic solvents it is preferred to use bases with a pKa larger than the pKa of the solvent. In this case the solvent is deprotonated and acts as the actual basic compound. In the method of the present invention, it may be preferred to use an aprotic solvent. A mixture of solvents may also be used. Examples of solvents which may be used are for example amides of the general formula R₅-CONR₆H, amines of the general formula R₇R₇-N-R₈, sulfones of the general formula R₈-SO₂-R₉, sulfoxides of the general formula R₈-SO-R₉, a solvent from the group consisting of alcohols, such as for example see-butanol and all linear or branched CₙH₂ₙ₊₂O where 1 ≤ n ≤ 20, glycols, polyethers, cyclic ethers, unsaturated ethers, wherein R₅, R₆ are the same or different and denote H, a linear or branched alkyl group, or R₅ and R₆ together are -(CH₂)₂-, -(CH₂)₃-, CH₂-CH=CH₂-CH₂ or -(CH₂)₄-; and R₇ has the meaning of R₅ or is a phenyl group which is unsubstituted or substituted by halogen, methyl and/or methoxy groups; and R₈, R₉ are the same or different and have the meaning of R₇, except H, or R₈ and R₉ together are -(CH₂)₂-, -(CH₂)₃-, -(CH₂)₄- or -CH₂-CH=CH-CH₂-.

The concentration of starting monomer (I) may be determined by the solubility of the monomer (I). All concentration of the starting monomer (I) in a solvent may be used as long as the monomer (I) is still fully soluble. However, a concentration of between 0.1 M and 0.3 M may generally be preferred.

In a preferred embodiment, a solution of the monomer of formula (I) or a mixture of at least two monomers of formula (I) at a giving temperature may be degassed for a giving time by passing through a continuous nitrogen flow. A basic compound dissolved in an organic solvent may then be added in one-go to the stirred monomer solution. The polymer may then be precipitated in ice-cold water and extracted, washed and dried. The precursor polymer with structural units of formula (II) such obtained is fully soluble in common organic solvents such as for example THF, cyclohexanone, DMF, chloroform, DMSO, toluene, benzene, dichlorobenzene, dichloromethane, acetone, dioxane and shows an average molecular weight (Mw) between 5.000 and 1.000.000 and a polydispersity between 2 and 15 measured by gel permeation chromatography relative to polystyrene standards.

In a second aspect of this invention, the precursor polymer (II) formed in the first aspect of this invention, is converted into the corresponding soluble or insoluble conjugated polymer having the general formula (III).

The soluble precursor polymer may be converted into the corresponding conjugated polymer with units of structural formula (III) in two ways:
1. by elimination of the leaving groups and formation of the vinylene double bonds by thermal heating of the precursor polymer solution under inert atmosphere or
2. by elimination of the leaving groups and formation of the vinylene double bonds by thermal heating in thin film. The thin films are prepared from the soluble precursor polymer by, for example, spin-coating, drop-casting, inkjet printing or doctor-blading or any other film-making techniques, and converted by heating under vacuum or under inert atmosphere. The conversion in thin film is preferred when the conjugated polymer is expected to be insoluble, therefore the conversion of the soluble precursor polymer towards the conjugated polymer is made in situ in thin film.

In one embodiment, the polymer (III) may be formed by performing the conversion step of the soluble precursor polymer towards the soluble conjugated polymer in solution. The conversion in solution is only possible when the conjugated polymer is a soluble polymer. The precursor polymer (II) may be subjected to a thermal conversion step at a temperature between 30°C and 300°C. The conversion reaction of the precursor polymer (II) starts around 100°C and is completed at around 250-300°C depending on the chemical structure of the polymer. In this embodiment, the precursor polymer (II) may thus be dissolved in a solvent in a giving concentration, typically 0.1 M, and is degassed by passing through a continuous nitrogen flow for, for example, 1 hour. The temperature may then be increased and the inert atmosphere is maintained during the conversion reaction and the cooling down. A typical procedure comprises heating a ramp from room temperature to the conversion temperature at 2°C/min, followed by isotherm at the conversion temperature for 3 hours and cooling down to room temperature. In another embodiment, more than one cycle as described above may be applied to the polymer.

In still another embodiment, the soluble or insoluble conjugated polymer (III) may be formed by performing the conversion step in thin film. Herefore, glass substrates coated with indium tin oxide (ITO) are cleaned with isopropanol in an ultrasonic bath for 20 minutes and dried in nitrogen flow. The precursor polymer (II) may then be coated on the glass substrate from solution. A two-step process may be used. A first step determines the film thickness and may be done with a closed cover for, for example, 5 seconds at 600 rpm. In a second step the film may be dried with an open cover for, for example, 2 minutes at 40 rpm.

The conversion of the precursor polymer (II) towards the soluble or insoluble conjugated polymer in thin film may be done in a glove box under inert atmosphere on a hot plate from room temperature to the conversion temperature at 2°C/min followed by 10 minutes at the conversion temperature. The conversion reaction may be carried out also under vacuum conditions.

The polymer (III) has to be kept under inert atmosphere.

In a further embodiment, an annealing treatment of the soluble or insoluble conjugated polymer in thin film may be carried out at a temperature of between 30°C and 200°C during 1 minute to 2 hours under vacuum or inert atmosphere in order to remove stresses of the polymer chains introduced during the deposition of the thin film layer and in order to induce a relaxation of the conjugated polymer chains and to change the conjugated polymer film morphology. No changes occur in the chemical structure of the conjugated polymer during this annealing treatment (heat treatment on conjugated polymer), in contrary to the conversion reaction (heat treatment on precursor polymer) which involves, under heating, an elimination of the leaving groups of the soluble precursor polymer with the formation of vinylene double bonds. This annealing treatment may be carried out before or after the electrode deposition on top of the active conjugated polymer layer.

According to the previous embodiment, the conversion of the precursor polymer (II) may be performed until substantially all leaving groups are eliminated. However, a conjugated polymer may not be fully, i.e. 100%, conjugated because there can always be structural defects which can lead to about 2 to 8%, in most cases between 2 to 5%, of the resulting polymer that has not been conjugated. Therefore, in accordance with the present invention a reference to a conjugated polymer may include within its scope a deviation from complete conjugation of about 2 to 5%.

In still another embodiment, the conversion of the precursor polymer may only be performed partially. Hence, in the resulting partially converted conjugated polymer, there may still be leaving groups present. The percentage of remaining leaving groups within the resulting conjugated polymer may be tuned by changing the experimental conditions such as, for example, temperature, conversion time, atmosphere. The amount of remaining leaving groups may be between 0 and 10%. For example, if the percentage of the remaining leaving groups is 5%, it means that there are, in the resulting partially converted conjugated polymer, for 100 monomer units 5 monomer units still having an leaving group and 95 monomer units not having an leaving group.

In a specific, preferred embodiment according to the invention, the conjugated arylene or heteroarylene vinylene polymer is a poly(2,5-thienylene vinylene) or PTV polymer with formula:

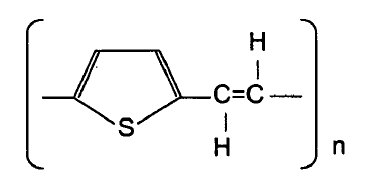

Due to the fact that the polymer is prepared by the method as described in the present invention, the poly(2,5-thienylene vinylene) polymer according to the invention shows a peak at a wavelength higher than 520 nm in the absorption spectrum.

In another embodiment according to the invention, also other PTV derivatives, which have side chains on the 2 and 3 positions (instead of on the 2 and 5 positions in the previous embodiment) on the thiophene ring may be used.

### Example 1

In a first example the synthesis of p-xylylene bis(N,N-diethyl dithiocarbamate) with a formula according to formula (I) wherein Ar = 1,4-phenylene, R₀ = -NR₁R₂ with R₁ = R₂ = C₂H₅, followed by the polymerisation to the precursor polymer with a formula according to formula (II) wherein Ar = 1,4-phenylene, R₀ = -NR₁R₂ with R₁ = R₂ = C₂H₅, R₃ = R₄ = H and subsequent conversion to the conjugated polymer with a formula according to formula (III) wherein Ar = 1,4-phenylene, R₃ = R₄ = H is illustrated.

To 50 ml of an acetonitrile/water solution (5 % vol water) of 1,4-bis(tetrahydrothiopheniomethyl)xylene dichloride (6 g, 17.143 mmol), diethyldithiocarbamic acid sodium salt trihydrate (8.87 g, 39.429 mmol) is added as a solid, after which the mixture is stirred at ambient temperature for two hours. Then, water is added and the desired monomer is extracted with ether (3 x 100 ml) and dried over MgSO₄. Evaporation of the solvent yields 6.2 g, which is 90 %, of the pure product as a white solid. ¹H NMR (CDCl₃): 7.31 (s, 4H), 4.49 (s, 4H), 4.01 (q, J = 7.2 Hz, 4H), 3.69 (q, J = 7.2 Hz, 4H), 1.25 (2t, J = 7.2 Hz, 12H). ¹³C NMR (CDCl₃): 195.10, 135.27, 129.57, 49.46, 46.70, 41.79, 12.44, 11.56; MS (EI, m/e): 253 (M⁺ - SC(S)NEt₂), 148 (SC(S)NEt₂), 105 (M+ - 2 x SC(S)NEt₂), 72 (NEt₂)

A solution of the synthesised monomer p-xylene bis(N,N-diethyldithiocarbamate) (500 mg, 1.25 mmol) in dry THF (6.25 ml, 0.2 M) at -78°C (or RT or 0"C) is degassed for 1 hour by passing through a continuous nitrogen flow. An equimolar LDA solution (625 µl of a 2 M solution in THF) is added in one go to the stirred monomer solution. The THF from the basic solution is neglected in the calculation of the monomer concentration. The mixture is then kept at -78°C (or R.T or 0°C) for 90 minutes while the passing of nitrogen is continued. After this, the solution is allowed to come to 0°C or ethanol (6 ml) is added at -78°C to stop the reaction (this is not necessary if the polymerisation is performed at RT or 0°C). The polymer is then precipitated in ice water (100 ml) and extracted with chloroform (3 x 60 ml). The solvent of the combined organic layers is evaporated under reduced pressure and a second precipitation is performed in a 1/1 mixture (100 ml) of diethyl ether and hexane at 0°C. The polymer was collected and dried in vacuum. ¹H NMR (CDCI₃): 6.78-7.14 (br s, 4H), 5.00-5.30 (br s, 1 H), 3.82-4.10 (br s, 2H), 3.51-3.78 (br s, 2H), 2.92-3.12 (br s, 2H), 1.04 -1.34 (br t, 6H). ¹³C NMR (CDCl₃): 194.38, 138.07, 137.17, 129.35, 128.30, 56.92, 49.15, 46.68, 42.63, 12.58, 11.65. The residual fractions only contained monomer residues. Polymerisation experiments are carried out at different temperatures. The results are summarised in table 1. In this table, Mw denotes the molecular weight and PD the polydispersity of the conjugated polymer.

**Table 1**

| Starting monomer with structural units of formula (I) with : Ar = 1,4-phenylene, R₀=-NR₁R₂ with R₁=R₂= Et in THF. | | | | |
|---|---|---|---|---|
| Conc. (M) | Polymerisation temp. (°C) | Yield (%) | Mw (g/mol) | PD |
| 0.2 | -78 | 90 | 7300 | 1.5 |
| | -78 to 0 | 88 | 15000 | 2.1 |
| | 0 | 87 | 31200 | 4.1 |
| | RT | 88 | 36500 | 5.5 |

### Example 2

In a second example, the synthesis of thiophene-2,5-diylbismethylene *N*,*N*-diethyl dithiocarbamate with a formula according to formula (I) wherein Ar = 2,5-thienylene and R₀ = -NR₁R₂ with R₁ = R₂ = C₂H₅, followed by polymerisation to the precursor polymer with a formula according to formula (II) wherein Ar = 2,5-thienylene, R₀ = -NR₁R₂ with R₁ = R₂ = C₂H₅ and R₃ = R₄ = H, and subsequent conversion to the conjugated polymer with a formula according to formula (III) wherein Ar = 2,5-thienylene and R₃ = R₄ = H, is illustrated.

The preparation of the monomer is analogous to that described in example 1, but here a bis-sulphonium salt of formula (IV) where Ar = 2,5-thienylene is used. The yield of the reaction is 81 %; ¹H NMR (CDCl₃): 6.84 (s, 2H), 4.69 (s, 4H), 4.01 (q, J = 7.2 Hz, 4H), 3.69 (q, J = 7.2 Hz, 4H), 1.26 (t, J = 7.2 Hz, 12H); ¹³C NMR (CDCl₃): 194.29, 138.76, 126.77, 49.46, 46.70, 36.72, 12.46, 11.53; MS (EI, m/e): 258 (M⁺ - SC(S)NEt₂), 148 (SC(S)NEt₂)

The polymerisation of thiophene-2,5-diylbismethylene N,N-diethyl dithiocarbamate is analogous to that described in example 1. ¹H NMR (CDCl₃): 6.56-6.72 (br s, 1H), 6.72-6.36 (br s, 1 H), 5.22-5.55 (br s, 1 H), 3.81-4.12 (br q, 2H), 3.48-3.81 (br q, 2H), 3.11-3.40 (br s, 2H), 1.01-1.37 (br t, 6H). ¹³C NMR (CDCl₃): 193.61, 140.77, 140.36, 126.15, 125.89, 52.50, 49.20, 46.73, 38.37, 12.45, 11.60.

In this example, polymerisation experiments are carried out at different temperatures and with different concentrations of starting monomer. The results of these experiments are summarised in table 2.

**Table 2**

| Starting monomer with structural units of formula (I) with : Ar = 2,5-thienylene, R₀ = -NR₁R₂ with R₁=R₂= Et in THF. | | | | |
|---|---|---|---|---|
| Conc. (M) | Polymerisation temp. (°C) | Yield (%) | Mw (g/mol) | PD |
| 0.1 | -78 | 47 | 62800 | 2.9 |
| | -78 to 0 | 55 | 90000 | 5.3 |
| | 0 | 42 | 23800 | 3.8 |
| 0.2 | -78 | 57 | 94400 | 3.1 |
| | -78 to 0 | 56 | 66100 | 4.9 |
| 0.3 | -78 to 0 | 53 | 12800 | 1.4 |

An organic field effect transistor is then prepared according to the following procedure using the soluble precursor polymer synthesised in accordance with the method described in this invention. Field-effect transistors (FETs) may be made of high doped Si substrates. In this example, an isolating oxide (SiO₂) of 100 nm is grown thermally on one side of the Si substrate, while the backside of the substrate is covered with an Al layer which acts as a gate electrode. An organic film is then applied on top of the oxide.

This may be done by means of spin-coating a 1 % w/v solution of the precursor polymer (II) in chlorobenzene. Measurements of the hole mobility are performed with FETs on which furthermore Au source and drain electrodes are evaporated after the organic film is applied. Before starting the measurement, the precursor polymer (II) in the form of a thin film is converted to the insoluble conjugated polymer poly(p-thienylene vinylene) (PTV) by heating the sample from room temperature to 185°C at 2°C per minute. After the sample is hold at 185°C for 10 minutes, it is cooled back to ambient temperature.

A negative gate-voltage induces an accumulation of positive charges in a thin conducting channel on the contact surface of the organic film with the oxide. The field-effect mobilities are determined from the saturation regime of the drain-source current with the formula: I_{ds,sat} = µ_{FE}WCₒₓ(V_{gs}-Vₜ)²/2L wherein W is the width and L the length of the conducting channel respectively, Cₒₓ is the capacity of the isolating SiO₂ layer, V_{gs} is the gate voltage and Vₜ is the threshold voltage.

A bilayer organic heterojunction solar cell is prepared according to the following procedure using the precursor polymer synthesised in accordance with the method described in this invention. Two ITO/PEDOT/PTV/Al devices on glass substrate were tested.

A first test is carried out with a first device wherein pristine is used an active layer. The second device is made by first converting the spin-coated precursor and afterwards spin-coating [6,6]-PCBM on top of it, thus forming a bilayer solar cell. J/V curves of the devices in dark and under illumination of 100 mW/cm² light from halogen lamp were studied. Experimental results of both devices are summarized in table 3.

**Table 3**

| Starting monomer with structural units of formula (I) with: Ar=2,5-thienylene, R₀ = -NR₁R₂ with R₁= R₂=Et. | | |
|---|---|---|
| | Pristine | Bilayer solar cell |
| J_{sc} (mA/cm²) | 430 | 1430 |
| V_{oc}(mV) | 435 | 515 |
| FF (%) | 34 | 48.5 |
| η (%) | 0.06 | 0.36 |

Organic heterojunction solar cells are prepared according to the following procedure using the soluble precursor polymer synthesised in accordance with the method described in this invention. Glass substrates coated with ITO (resistance ∼ 90 ohm per square) are first cleaned with isopropanol in an ultrasonic bath for 20 min and dried in a nitrogen flow. The samples are brought into the glove box with a nitrogen atmosphere. All following steps now are done inside the glove box. An 80 nm layer of PEDOT/PSSA is spin-coated on top of the ITO and heat treated for 10 min at 180 °C on a hot plate. Then, the sample is cooled down to room temperature and thereafter the photoactive layer, which is cast from a 0.5wt.-% solution of precursor polymer of formula (II) mixed with a soluble C₆₀ derivative (PCBM) in chlorobenzene, is spincoated on top of the PEDOT/PSSA. The ratio by weight of the precursor polymer of formula (II) and PCBM is comprised between 1:0.5 and 1:4. The solution is stirred with a magnetic stirrer for 4 hours at room temperature.

The spincoating of the active layer is a two-step procedure. The first step, to determine the thickness, is done with a closed cover. The spinning speed is comprised between 250 rpm and 600 rpm and the spinning time between 1 and 5 seconds. The second step is to dry the film. This step is performed with an open cover for 3 min at 100 rpm. The converted film may have a thickness between 80 and 100 nm.

The conversion of the soluble precursor polymer, in the example given blended with PCBM, is done on a hot plate inside the glove box from room temperature up to 150°C with a temperature step of 2°C per minute. Then, the temperature is kept constant at 150°C for 5 min. This is the so-called "Conversion reaction" done by heat treatment, here in thin film, in which a soluble precursor polymer is chemically converted to the related conjugated polymer, which might be soluble or insoluble, by thermal induced elimination of the leaving groups and formation of the vinylene double bonds. After that, the top electrode is evaporated in a vacuum of 2.10⁻⁶ mbar. First, a 0.7 nm thick layer of LiF and then a second layer of 150 nm aluminum are evaporated. The active area of each cell is 6 mm².

Afterwards, the sample is measured with a solar simulator (AM1.5 spectrum). Then, a post-production heat treatment, also called annealing treatment, on a hot plate took place for several times, starting with 5 min at 70°C. Then the samples are measured again at room temperature and after that annealing process again (55 min, in total 1 hour). Five annealing steps are done with a total time of 9 hours. The results are much higher after 9 hours of annealing than the initially values. The goal of the annealing treatment, which is a heat treatment done on the level of the conjugated polymer and not at the level of the precursor polymer, is not a chemical reaction induced by heat but a heat relaxation process of the conjugated polymer chains to release stress and therefore induces a transformation of the conjugated polymer chains morphology.

Example of results found for a Polymer/PCBM ratio of 1:1 with V_{oc} = 0.41V; J_{sc} = 3.42 mA/cm²; FF = 34.4 %; η = 0.48 %.

### Example 3

A third example describes the synthesis of thiophene-2,5-diylbismethylene N,N-diethyl dithiocarbamate-3,4-diphenyl with a formula according to formula (I) wherein Ar = 3,4- diphenyl 2,5-thienylene and R₀ = -NR₁R₂ with R₁ = R₂ = C₂H₅ followed by polymerisation to the precursor polymer with a formula according to formula (II) wherein Ar = 3,4- diphenyl 2,5-thienylene and R₃ = R₄ = H.

For the synthesis of 3,4-Diphenylthiophene, phenylboronic acid (7.12 g, 58.394 mmol), 3,4-dibromothiophene (3.05 g, 12.603 mmol) and KF (2.92 g, 50.345 mmol) are dissolved in a mixture water and toluene 50/50 (80 mL). Pd(PPh₃)₄ (873 mg) is added as a catalyst. After refluxing the mixture for 24 hours, an extraction with CHCI₃ (3 x 50 mL) is performed and the combined organic phases are dried over MgSO₄. The crude reaction product is purified by column chromatography (silica, n-hexane). The yield is 75 %; ¹H NMR (CDCl₃): 7.30 (s, 2H), 7.25-7.21 (m, 6H), 7.19-7.16 (m, 4H); MS (EI, m/e): 236 (M⁺)

For the synthesis of 3,4-Diphenyl-2,5-bis chloromethyl thiophene concentrated HCI (4.93 g, 50.650 mmol) and acetic anhydride (9.06 g, 88.859 mmol) are, under nitrogen atmosphere, added to paraformaldehyde (719 mg, 23.992 mmol) and 3,4-diphenylthiophene (2.1 g, 8.886 mmol) in a three-necked flask. After 4.5 hours refluxing this mixture at 70°C, 10 mL of a cold saturated aqueous solution of sodium acetate and 10 mL of a 25% aqueous solution of sodium hydroxide are added. The mixture is then extracted with CHCl₃ (3 x 50 mL) and dried over MgSO₄. The yield of the process is 98 %. ¹H NMR (CDCl₃): 7.24-7.21 (m, 6H), 7.08-7.05 (m, 4H), 4.67 (s, 4H); MS (El, m/e): 332 (M⁺), 297 (M⁺ - Cl), 261 (M⁺ - 2 Cl)

For the synthesis of 3,4-diphenylthiophene-2,5-diylbismethylene N,N-diethyl dithiocarbamate a mixture of 3,4-diphenyl-2,5-bischloromethylthiophene (3 g, 8.890 mmol) and sodium diethyldithiocarbamate trihydrate (4.6 g, 20.448 mmol) in 10 mL of methanol is stirred for three hours at room temperature. The mixture is then extracted with CHCl₃ (3 x 50 mL), dried over MgSO₄ and after the solvent is evaporated, 3.5 g (70% yieid) of dithiocarbamate monomer is obtained as a pink solid. ¹H NMR (CDCl₃): 7.24-7.14 (m, 6H), 7.03-7.00 (m, 4H), 4.62 (s, 4H), 4.01 (q, J = 7.2 Hz, 4H), 3.69 (q, J = 7.2 Hz, 4H), 1.26 (2t, J = 7.2 Hz, 12H). ¹³C NMR (CDCl₃): 194.22, 141.14, 135.33, 133.39, 129.99, 127.82, 126.77, 49.31, 46.63, 35.82, 12.39, 11.43.

A solution of the synthesised monomer (400 mg, 0.716 mmol) in dry THF (3.6 ml, 0.2 M) at -78°C (or room temperature or 0°C) is degassed for 15 minutes by passing through a continuous nitrogen flow. An equimolar LDA solution (360 µL of a 2 M solution in THF/n-hexane) is then added in one go to the stirred monomer solution. The mixture is kept at -78°C (or room temperature or 0°C) for 90 minutes and the passing of nitrogen is continued. After this, the solution is allowed to come to 0°C or ethanol (6 ml) is added at -78°C to stop the reaction (this is not necessary if the polymerisation is performed at R.T or 0°C). The polymer is precipitated in ice water (100 ml) and extracted with chloroform (3 x 60 ml). The solvent of the combined organic layers is evaporated under reduced pressure and a second precipitation is performed in MeOH. The precursor polymer is collected and dried in vacuum. ¹H NMR (CDCl₃): 6.78-7.14 (br s, 4H), 5.00-5.30 (br s, 1H), 3.82-4.10 (br s, 2H), 3.51-3.78 (br s, 2H), 2.92-3.12 (br s, 2H), 1.04-1.34 (br t, 6H). ¹³C NMR (CDCl₃): 194.38, 138.07, 137.17, 129.35, 128.30, 56.92, 49.15, 46.68, 42.63, 12.58, 11.65.

**Table 4**

| Starting monomer with structural units of formula (I) wherein Ar = 3,4-diphenyl-2,5-thienylene, R₀ = -NR₁R₂ with R₁=R₂= Et in THF. | | | | |
|---|---|---|---|---|
| Conc. (M) | Polymerisation temp. (°C) | Yield (%) | Mw (g/mol) in DMF | PD |
| 0.2 | 0 | 30 | 50400 | 1.4 |
| | -78 | 60 | 29800 | 1.2 |
| | -78 to 0 | 50 | 24600 | 1.2 |

### Example 4

In a fourth example, a co-polymerisation reaction between p-xylene bis(N,N-diethyldithiocarbamate) (Formula (I) wherein Ar is a thiophene ring and R₁ = R₂ = C₂H₅ and further denoted as A) and 2,5-bis[ethoxy(thiocarbonyl) thiomethyl] thiophene (Formula (VI) wherein Ar is a thiophene ring, R₇ = R₈ = H and Y = Z= SC(S)OEtEt, and further denoted as B) is illustrated.

A solution of monomer p-xylene bis(N,N-diethyldithiocarbamate) (375, 250, 125 mg respectively) and monomer 2,5-bis [ethoxy(thiocarbonyl) thiomethyl)thiophene (108, 217, 325 mg respectively) in dry THF (6.16 ml, 0.2 M) at -78°C is degassed for 1 hour by passing through a continuous nitrogen flow. An equimolar LDA solution (616 µl of a 2 M solution in THF) is added in one go to the stirred monomer solution. The mixture is kept at -78°C for 90 minutes and the passing of nitrogen is continued. After this, ethanol (6 ml) is added at -78°C to stop the reaction. The polymer is precipitated in ice water (100 ml) and extracted with chloroform (3 x 60 ml). The solvent of the combined organic layers is evaporated under reduced pressure and a second precipitation is performed in a 1/1 mixture (100 ml) of diethyl ether and hexane at 0°C. The polymer is collected and dried in vacuum.

Experiments are carried out at different ratios of A and B. The results are summarised in table 5.

**Table 5**

| Starting monomer as a mixture of monomer with structural units of formula (I) wherein Ar = 2,5-thienylene, R₀ = -NR₁R₂ with R₁ = R₂ = Et, (A), and of monomer with structural units of formula (VI) wherein Ar = 2,5-thienylene, R₇ = R₈ = H and Y = Z = SC(S)OEtEt, (B) | | | |
|---|---|---|---|
| Molar Ratio A/B | Yield (%) | Mw (g/mol) | PD |
| 100/0 | 57 | 94400 | 3.1 |
| 75/25 | 56 | 372600 | 13.3 |
| 50/50 | 69 | 309900 | 12.8 |
| 25/75 | 70 | 202700 | 10.3 |
| 0/100 | 50 | 137200 | 7.8 |

### Example 5

In a fifth example, the synthesis of 2,5-bis(*N,N-*diethyl dithiocarbamate)-1-(3,7-dimethyloctyloxy)-4-methoxybenzene with a formula according to formula (I) wherein Ar = 1-(3,7-dimethyloctyloxy)-4-methoxy-2,5-phenylene, R₀ = -NR₁R₂, R₁ = R₂ = C₂H₅, followed by the polymerisation to the soluble precursor polymer with a formula according to formula (II) wherein Ar = 1-(3,7-dimethyloctyloxy)-4-methoxy-2,5-phenylene, R₃ = R₄ = H, is illustrated.

To 50 ml of an ethanol solution of 2,5-bis(chloromethyl)-1-(3,7-diemthyloxtyloxy)-4-methoxybenzene (5 g, 13.889 mmol), diethyl dithiocarbamic acid sodium salt trihydrate (7.19 g, 31.944 mmol) is added as a solid, after which the mixture is stirred at ambient temperature for three hours. Then, water is added and the desired monomer is extracted with ether (3 x 100 ml) and dried over MgSO₄. Evaporation of the solvents yields 92% of the pure product as a white solid. ¹H NMR (CDCl₃): 6.99 (s, 2H), 4.52 (s, 2H), 4.48 (s, 2H), 3.95 (m, 4H+2H), 3.74 (s, 3H), 3.64 (m, 4H), 1.60-1.85 (m, 2H), 1.38-1.58 (m, 2H), 1.21 (t, 12H), 1.05-1.30 (m, 6H), 0.88 (d, 3H), 0.81 (d, 6H); ¹³C NMR (CDCl₃): 196.11, 195.99, 151.27, 150.90, 125.08, 124.42, 114.75, 113.86, 67.13, 56.19, 49.41, 49.34, 46.61, 39.22, 37.32, 36.83, 36.30, 29.79, 27.95, 24.69, 22.69, 22.59, 19.62, 12.42, 11.59

The polymerisation reaction is analogous to that described in example 1. Polymerisation experiments are carried out at different temperatures. The results are summarised in table 6.

**Table 6**

| Starting monomer with structural units of formula (I) wherein Ar =1-(3,7-dimethyloctyloxy)-4-methoxy-2,5-phenylene, R₀=-NR₁R₂ with R₁=R₂=C₂H₅ in THF | | | |
|---|---|---|---|
| Polymerisation temperature | Yield (%) | Mw (g/mol) (in DMF) | PD (in DMF) |
| -78°C | 54 | 3800 | 1.0 |
| Room temperature | 59 | 14900 | 2.8 |
| | 69 | 18400 | 2.9 |
| 35°C | 62 | 18900 | 2.9 |
| 65°C | 39 | 37100 | 1.4 |

### Example 6

A sixth example describes the synthesis of pyridine-2,5-diylbismethylene *N,N*-diethyl dithiocarbamate with a formula according to formula (I) wherein Ar = 2,5-pyridine, R₀ = -NR₁R₂, R₁ = R₂= C₂H₅, followed by the polymerisation to the soluble precursor polymer with a formula according to formula (II) wherein Ar = 2,5-pyridine, R₃ = R₄ = H.

The yield of the reaction is 82%. ¹H NMR (CDCl₃): 8.54 (d, 1 H), 7.86 (d, 1 H), 7.63 (d, 1 H), 4.88 (s, 2H), 4.56 (s, 2H), 4.00 (q, 4H), 3.72 (q, 4H), 1.26 (2t, 12H); MS (EI, m/e): 401 (M⁺), 285 (M⁺ - C(S)NEt₂), 148 (SC(S)NEt₂), 116 (C(S)NEt₂).

The polymerisation reaction is analogous to that described in example 1. Polymerisation experiments are carried out at room temperature and 35°C. The results are summarised in table 7.

**Table 7**

| Starting monomer with structural units of formula (I) wherein Ar =2,5-pyridine, R₀=-NR₁R₂ with R₁=R₂=C₂H₅ in THF | | | |
|---|---|---|---|
| Polymerisation temperature | Yield (%) | Mw (g/mol) (in DMF) | PD (in DMF) |
| Room temperature | 43 | 14800 | 2.0 |
| 35°C | 40 | 15800 | 2.1 |

### Example 7

In a seventh example, the synthesis of 1,4-bis{2-[2-(2-methoxyethoxy)ethoxy]ethoxy}-2,5-diylbismethylene *N*,*N*-diethyl dithiocarbamate with a formula according to formula (I) wherein Ar = 1,4-bis-(2-(2-(2-methoxy-ethoxy)-ethoxy)-ethoxy)-benzene, R₀ = -NR₁R₂, R₁ = R₂ = C₂H₅, followed by the polymerisation to the soluble precursor polymer with a formula according to formula (II) wherein Ar = 1,4-bis-(2-(2-(2-methoxy-ethoxy)-ethoxy)-ethoxy)-benzene, R₃ = R₄ = H.

The yield of the reaction is 75%. ¹H NMR (CDCl₃): 7.01 (s, 2H), 4.54 (s, 4H), 4.09 (t, 4H), 3.81 (t, 4H), 3.60-3.76 (m, 20H), 3.53 (m, 4H), 3.36 (s, 6H), 1.25 (t, 12H); ¹³C NMR (CDCl₃): 195.80, 150.73, 125.30, 115.22, 71.84, 70.83, 70.63, 70.47, 69.69, 68.81, 58.95, 49.38, 46.56, 36.48, 12.41, 11.57; DIP MS (CI, m/e): 725 (M⁺), 576 (M⁺- SC(S)NEt₂).

The polymerisation reaction is analogous to that described in example 1. ¹H NMR (CDCIₛ): 6.69-6.87 (br s, 2H), 5.56-5.76 (br s, 1 H), 3.42-4.13 (mm, 28H), 1.00-1.34 (br t, 6H)

**Table 8**

| Starting monomer with structural units of formula (I) wherein Ar =1,4-bis(2-(2-(2-methoxy-ethoxy)ethoxy)-ethoxy)-benzene, R₀=NR₁R₂ with R₁=R₂=C₂H₅ in THF | | | |
|---|---|---|---|
| Polymerisation temperature | Yield (%) | Mw (g/mol) (in DMF) | PD (in DMF) |
| Room temperature | 59 | 14900 | 2.8 |

### Example 8

In an eighth example, the synthesis of 3,4-dichlorothiophene-2,5-diylbismethylene *N*,*N*-diethyl dithiocarbamate with a formula according to formula (I) wherein Ar = 3,4-dichloro-2,5-thienylene, R₀ = -NR₁R₂, R₁ = R₂ = C₂H₅, followed by the polymerisation to the soluble precursor polymer with a formula according to formula (II) wherein Ar = 3,4-dichloro-2,5-thienylene, R₃ = R₄= H, is illustrated.

The yield of the reaction is 94%; ¹H NMR (CDCl₃): 4.71 (s, 4H), 4.00 (q, J = 7.2 Hz, 4H), 3.69 (q, J = 7.2 Hz, 4H), 1.26 (t, J = 7.2 Hz, 12H); ¹³C NMR (CDCl₃): 193.58, 131.67, 122.65, 49.80, 46.84, 34.50, 12.52, 11.53; MS (EI, m/e): 326 (M⁺ - SC(S)NEt₂), 178 (M⁺ - 2 SC(S)NEt₂), 148 (SC(S)NEt₂),116 (C(S)NEt₂), 72 (NEt₂).

The polymerisation reaction is analogous to that described in example 1. ¹H NMR (CDCl₃): 5.50-5.80 (br s, 1 H), 3.85-4.08 (br q, 2H), 3.63-3.83 (br q, 2H), 3.32-3.51 (br s, 2H), 1.14-1.36 (br t, 6H)

In this example, polymerisation experiments are carried out at room temperature and 35°C. The results are summarised in table 9.

**Table 9**

| Starting monomer.with structural units of formula (I) wherein Ar =3,4-dichloro-2,5thienylene, R₀=-NR₁R₂ with R₁=R₂=C₂H₅ in THF | | | |
|---|---|---|---|
| Polymerisation temperature | Yield (%) | Mw (g/mol) (in DMF) | PD (in DMF) |
| Room temperature | 64 | 10400 | 1.8 |
| 35°C | 76 | 18500 | 2.8 |

### Example 9

In an ninth example, the synthesis of naphthalene-1,4-diylbismethylene N,N-diethyl dithiocarbamate with a formula according to formula (I) wherein Ar = 1,4-naphthalene, R₀ = -NR₁R₂, R₁ = R₂ = C₂H₅, followed by the polymerisation to the soluble precursor polymer with a formula according to formula (II) wherein Ar = 1,4-naphthalene, R₃ = R₄ = H, is illustrated.

The yield of the reaction is 89%; ¹H NMR (CDCl₃): 8.10, (q, 2H), 7.585 (q, 2H), 7.51 (s, 2H), 4.94 (s, 4H), 4.05 (q, J = 7.2 Hz, 4H), 3.66 (q, J = 7.2 Hz, 4H), 1.29 (2t, J = 7.2 Hz, 6H), 1.21 (2t, J = 7.2 Hz, 6H); ¹³C NMR (CDCl₃): 195.10, 132.21, 131.96, 127.93, 126.40, 124.86, 49.41, 46.70, 40.48, 12.42, 11.61; DIP MS (EI, m/e): 302 (M⁺ - SC(S)NEt₂), 148 (SC(S)NEt₂), 116 (C(S)NEt₂).. The polymerisation reaction is analogous to that described in example 1. Polymerisation experiments are carried out at room temperature and 35°C. The results are summarised in table 10.

**Table 10**

| Starting monomer with structural units of formula (I) wherein Ar =1,4-naphtalene, R₀=-NR₁R₂ with R₁=R₂=C₂H₅ in THF | | | |
|---|---|---|---|
| Polymerisation temperature | Yield (%) | Mw (g/mol) (in DMF) | PD (in DMF) |
| Room temperature | 80 | 14600 | 1.5 |
| 35°C | 78 | 15900 | 1.7 |

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A method for the preparation of a precursor polymer having the general formula : 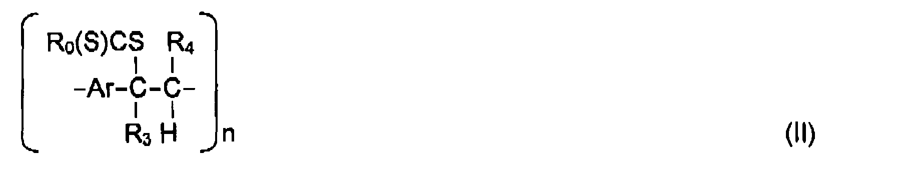 wherein Ar is an aromatic divalent group or a heteroaromatic divalent group, wherein R₀ is selected from the group consisting of an amino group -NR₁R₂, an aryloxy group, an alkyl group, an aryl group, an alkylaryl group, an arylalkyl group, a thioether group, an ester group or an acid carboxylic group, and wherein R₃ and R₄ are, independently from each other, hydrogen or an organic group selected from the group consisting of a C₁-C₂₀-alkyl group, a cyclic C₃-C₂₀-alkyl group, aryl groups, alkylaryl groups, arylalkyl groups and heterocyclic groups ,
said method comprising the steps of :
- providing a monomer having the general formula : 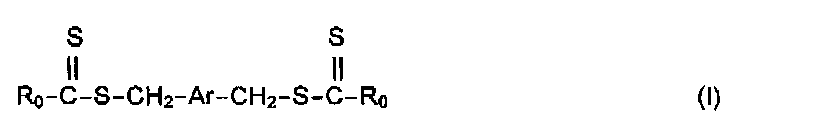 wherein Ar is an aromatic divalent group or an heteroaromatic divalent group, wherein R₀ is selected from the group consisting of an amino group -NR₁R₂, an aryloxy group, an alkyl group, an aryl group, an alkylaryl group, an arylalkyl group, a thioether group, an ester group, and an acid carboxylic group, and
- reacting said monomer with a basic compound in the presence of an organic solvent to obtain said precursor polymer,
wherein the amount of said basic compound is between 1 and 2 equivalents with respect to the monomer.

2. The method according to claim 1, wherein R₀ is an amino group -NR₁R₂.

3. The method according to claim 2, wherein R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group.

4. The method according to claim 3, wherein R₁ and R₂ are independently selected from the group consisting of a methyl group, an ethyl group, a propyl group, a phenyl group and a benzyl group.

5. The method according to any of claims 1 to 4, wherein said basic compound is selected from the group consisting of a metal hydride, a metal alkoxide, a metal hydroxide, a metal amide, a metal amine, an organometallic compound wherein the metal is an alkaline metal or alkaline earth metal, a Grignard reagent, ammonium hydroxide, pyridine and phosphazene bases.

6. The method according to any of claims 1 to 5, wherein the concentration of said monomer (I) is between 0.1 M and 0.3 M.

7. The method according to any of claims 1 to 6, wherein Ar is an aromatic or heteroaromatic divalent group with 4 to 20 carbon atoms substituted with one or more substituents independently selected from the group consisting of C₁-C₂₀-alkyl, C₃-C₂₀-alkoxy, C₁-C₂₀-alkylsulfate, oligo- or polyethylene oxide, oligo- or polyethylene glycol, a phenyl group or a benzyl group and wherein Ar comprise up to 4 heteroatoms chosen from the group comprising oxygen, sulphur, and nitrogen in the aromatic divalent group.

8. The method according to any of claims 1 to 7, wherein said aromatic or heteroaromatic divalent group is selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl.

9. The method according to claim 8, wherein said aromatic or heteroaromatic divalent group is 1,4-phenylene or 2,5-thienylene.

10. The method according to claim 9, wherein said aromatic or heteroaromatic divalent group is 2,5 thienylene.

11. The method according to claim 4, wherein R₁ and R₂ are independently from each other selected from the group consisting of methyl, ethyl and isopropyl.

12. The method according to any of ,claims 1 to 11, wherein said organic solvent is an aprotic solvent.

13. The method according to any of claims 1 to 12, wherein said reacting step is performed at a temperature between -78°C and 200°C.

14. The method according to claim 13, wherein said reacting step is performed at a temperature between -20°C and 30°C.

15. A precursor polymer compound having the general formula 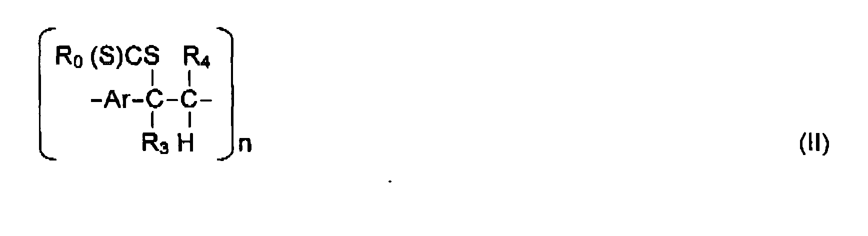 wherein Ar is an aromatic group or an heteroaromatic divalent group, wherein R₀ is selected from the group consisting of an amino group - NR₁R₂, an aryloxy group, an alkyl group, an aryl group, an alkylaryl group, an arylalkyl group, a thioether group, an ester group or an acid carboxylic group, and wherein R₃ and R₄ are independently from each other hydrogen or an organic group selected from the group consisting of a C₁-C₂₀-alkyl group, a cyclic C₃-C₂₀-alkyl group, aryl groups, alkylaryl groups, arylalkyl groups and heterocyclic groups.

16. The precursor polymer compound according to claim 15, wherein R₀ is an amino group -NR₁R₂.

17. The precursor polymer compound according to claim 16, wherein R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group.

18. The precursor polymer compound according to claim 17, wherein R₁ and R₂ are independently selected from the group consisting of a methyl group, an ethyl group, a propyl group, a phenyl group and a benzyl group.

19. The precursor polymer compound according to any of claims 15 to 18, wherein the Ar is an aromatic divalent group with 4 to 20 carbon atoms substituted with one or more substituents independently selected from the group consisting of C₁-C₂₀-akyl, C₃-C₂₀-alkoxy, C₁-C₂₀-alkylsulfate, oligo- or polyethylene oxide, oligo- or polyethylene glycol, a phenyl group or a benzyl group and wherein Ar group comprise up to 4 heteroatoms chosen from the group comprising oxygen, sulphur and nitrogen in the aromatic divalent group.

20. The precursor polymer compound according to any of claims 15 to 19, wherein said aromatic or heteroaromatic divalent group is selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiazole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl.

21. The precursor polymer compound according to any of claims 15 to 20, wherein said precursor polymer has an average molecular weight between 5,000 and 1,000,000 Daltons.

22. The precursor polymer compound according to any of claims 15 to 21, wherein said precursor polymer has a polydispersity between 1.5 and 5.5.

23. The precursor polymer compound according to claim 22, wherein said precursor polymer has a polydispersity below 2.

24. A method for the preparation of a conjugated polymer comprising the structural units 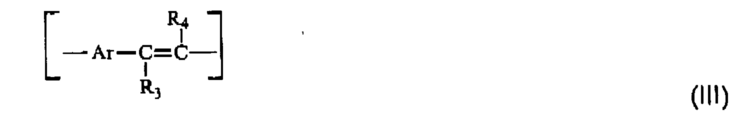 wherein Ar is an aromatic divalent group or an heteroaromatic divalent group, wherein R₃ and R₄ are independently from each other hydrogen or an organic group selected from the group consisting of a C₁-C₂₀-alkyl group, a cyclic C₃-C₂₀-alkyl group, aryl groups, alkylaryl groups, arylalkyl groups and heterocyclic groups, said method comprising the steps of :
- providing at least one precursor polymer according to any of claims 15 to 23, and
- subjecting said precursor polymer to a thermal conversion step at a temperature between 30°C and 300°C.

25. The method according to claim 24, wherein R₀ is an amino group - NR₁R₂.

26. The method according to claim 25, wherein R₁ and R₂ are independently from each other an organic group selected from the group consisting of a C₁-C₂₀-alkyl group, a cyclic C₃-C₂₀-alkyl group, an aryl group, an alkylaryl group, an arylalkyl group and a heterocyclic group.

27. The method according to claim 26, wherein R₁ and R₂ are independently selected from the group consisting of a methyl group, an ethyl group, a propyl group, a phenyl group and a benzyl group.

28. The method according to any of claims 24 to 27, wherein said precursor polymer (II) has leaving groups being eliminated during said thermal conversion step, and wherein between 0 and 10 % of said leaving groups are not eliminated during said thermal conversion step, thus leading to the formation of a partially converted conjugated polymer (III).

29. The method according to any of claims 24 to 28, wherein said aromatic or heteroaromatic divalent group is selected from the group consisting of 1,4-phenylene; 2,6-naphthalenediyl; 1,4-naphthalenediyl; 1,4-anthracenediyl; 2,6-anthracenediyl; 9,10-anthracenediyl; 2,5-thienylene; 2,4-thienylene; 2,3-thienylene; 2,5-furanediyl; 2,5-pyrrolediyl; 1,3,4-oxadiazole-2,5-dyil; 1,3,4-thiadiezole-2,5-diyl; 2,5-benzo[c]thienylene; thieno[3,2-b]thiophene-2,5-diyl; pyrrolo[3,2-b]pyrrole-2,5-diyl; pyrene-2,7-diyl; 4,5,9,10-tetrahydropyrene-2,7-diyl; 4,4'-bi-phenylene; phenantrene-2,7-diyl; 9,10-dihydrophenantrene-2,7-diyl; dibenzofurane-2,7-diyl; dibenzothiophene-2,7-diyl.

30. The method according to claim 29, wherein said aromatic or heteroaromatic divalent group is 1,4-phenylene or 2,5-thienylene.

31. The method according to claim 30, wherein said aromatic or heteroaromatic divalent group is 2,5 thienylene.

32. The method according to any of claims 24 to 31, wherein R₃ and R₄ are hydrogen.

33. The method according to any of claims 24 to 32, wherein said polymer (III) is a conjugated poly(arylene vinylene) polymer.

34. The method according to claim 33, wherein said conjugated arylene vinylene polymer is poly(2,5 thienylene vinylene).

35. The method according to any of claims 24 to 34, wherein said precursor polymer (II) is in the form of a thin film precursor polymer layer and wherein said thermal conversion step is performed under inert atmosphere.

36. The method according to any of claims 24 to 35, wherein said precursor polymer (II) is dissolved in a solvent followed by a degassing step.

## Patentansprüche

1. Verfahren zur Herstellung eines Vorläuferpolymers mit der allgemeinen Formel 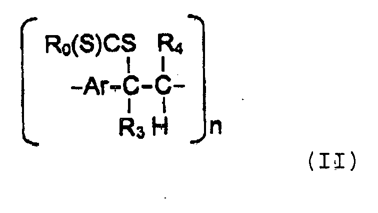 wobei Ar eine aromatische divalente Gruppe oder eine heteroaromatische divalente Gruppe ist, wobei R₀ ausgewählt ist aus der Gruppe bestehend aus einer Aminogruppe -NR₁R₂, einer Aryloxygruppe, einer Alkylgruppe, einer Arylgruppe, einer Alkylarylgruppe, einer Arylalkylgruppe, einer Thioethergruppe, einer Estergruppe oder einer Carbonsäuregruppe, und wobei R₃ und R₄ unabhängig voneinander Wasserstoff oder eine organische Gruppe sind, die ausgewählt ist aus der Gruppe bestehend aus einer C₁-C₂₀-Alkylgruppe, einer cyclischen C₃-C₂₀-Alkylgruppe, Arylgruppen, Alkylarylgruppen, Arylalkylgruppen und heterocyclischen Gruppen,
wobei das Verfahren folgende Schritte umfasst:
- Bereitstellen eines Monomers mit der allgemeinen Formel: 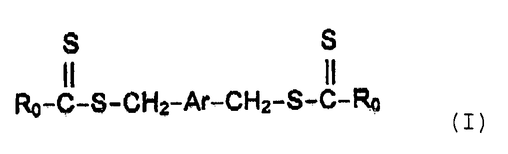 wobei Ar eine aromatische divalente Gruppe oder eine heteroaromatische divalente Gruppe ist, wobei R₀ ausgewählt ist aus der Gruppe bestehend aus einer Aminogruppe -NR₁R₂, einer Aryloxygruppe, einer Alkylgruppe, einer Arylgruppe, einer Alkylarylgruppe, einer Arylalkylgruppe, einer Thioethergruppe, einer Estergruppe und einer Carbonsäuregruppe, und
- Reagieren des Monomers mit einer basischen Verbindung in Gegenwart eines organischen Lösemittels, um das Vorläuferpolymer zu erhalten,
wobei die Menge der basischen Verbindung 1 bis 2 Äquivalent(e) relativ zu dem Monomer ist.

2. Verfahren nach Anspruch 1, wobei R₀ eine Aminogruppe -NR₁R₂ ist.

3. Verfahren nach Anspruch 2, wobei R₁ und R₂ unabhängig voneinander eine organische Gruppe sind, die ausgewählt ist aus der Gruppe bestehend aus einer C₁-C₂₀-Alkylgruppe, einer cyclischen C₃-C₂₀-Alkylgruppe, einer Arylgruppe, einer Alkylarylgruppe, einer Arylalkylgruppe und einer heterocyclischen Gruppe.

4. Verfahren nach Anspruch 1, wobei R₁ und R₂ unabhängig ausgewählt sind aus der Gruppe bestehend aus einer Methylgruppe, einer Ethylgruppe, einer Propylgruppe, einer Phenylgruppe und einer Benzylgruppe.

5. Verfahren nach einem der Ansprüche 1 bis 4, wobei die basische Verbindung ausgewählt ist aus der Gruppe bestehend aus einem Metallhydrid, einem Metallalkoxid, einem Metallhydroxid, einem Metallamid, einem Metallamin, einer Organometallverbindung, wobei das Metall ein Alkalimetall oder Erdalkalimetall ist, einem Grignard-Reagens, einem Ammoniumhydroxid, Pyridin- und Phosphazenbasen.

6. Verfahren nach Anspruch 1 bis 5, wobei die Konzentration des Monomers (I) zwischen 0,1 M und 0,3 M beträgt.

7. Verfahren nach einem der Ansprüche 1 bis 6, wobei Ar eine aromatische oder heteroaromatische divalente Gruppe mit 4 bis 20 Kohlenstoffatomen ist, substituiert mit einem oder mehreren Substituenten, der bzw. die unabhängig ausgewählt ist bzw. sind aus der Gruppe bestehend aus C₁-C₂₀-Alkyl, C₃-C₂₀-Alkoxy, C₁-C₂₀-Alkylsulfat, Oligo- oder Polyethylenoxid, Oligo- oder Polyethylenglycol, einer Phenylgruppe oder einer Benzylgruppe, und wobei Ar bis zu 4 Heteroatome umfasst, die ausgewählt sind aus der Gruppe umfassend Sauerstoff, Schwefel und Stickstoff in der aromatischen divalenten Gruppe.

8. Verfahren nach Anspruch 1, wobei die aromatische oder heteroaromatische divalente Gruppe ausgewählt ist aus der Gruppe bestehend aus 1,4-Phenylen; 2,6-Naphthalindiyl; 1,4-Naphthalindiyl; 1,4-Anthracpndi,yl; 2,6-Anthracendiyl; 9,10-Anthracendiyl; 2,5-Thienylen; 2,4-Thienylen; 2,3-Thienylen; 2,5-Furandiyl; 2,5-Pyrroldiyl; 1,3,4-Oxacliazol-2,5-diyl; 1,3,4-Thiadiazol-2,5-diyl; 2,5-Benzo[c]thienylen; Thieno[3,2-b]thiophen-2,5-diyl; Pyrrolo[3,2-b]pyrrol-2,5-diyl; Pyren-2,7-diyl; 4,5,9,10-Tetrahydropyren-2,7-diyl; 4,4'-Bi-phenylen; Phenantren-2,7-diyl; 9,10-Dihydrophenantren-2,7-diyl; Dibenzofuran-2,7-diyl; Dibenzothiophen-2,7-diyl.

9. Verfahren nach Anspruch 8, wobei die aromatische oder heteroaromatische divalente Gruppe 1,4-Phenylen oder 2,5-Thienylen ist.

10. Verfahren nach Anspruch 9, wobei die aromatische oder heteroaromatische divalente Gruppe 2,5-Thienylen ist.

11. Verfahren nach Anspruch 4, wobei R₁ und R₂ unabhängig voneinander ausgewählt sind aus der Gruppe bestehend aus Methyl, Ethyl und Isopropyl.

12. Verfahren nach einem der Ansprüche 1 bis 11, wobei das organische Lösemittel ein aprotisches Lösemittel ist.

13. Verfahren nach einem der Ansprüche 1 bis 12, wobei der Reaktionsschritt bei einer Temperatur zwischen -78°C und 200°C durchgeführt wird.

14. Verfahren nach Anspruch 13, wobei der Reaktionsschritt bei einer Temperatur zwischen -20°C und 30°C durchgeführt wird.

15. Vorläuferpolymerverbindung mit der allgemeinen Formel 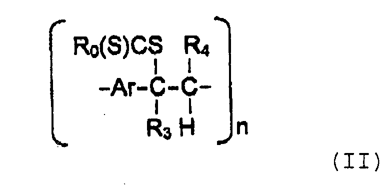 wobei Ar eine aromatische Gruppe oder eine heteroaromatische divalente Gruppe ist, wobei R₀ ausgewählt ist aus der Gruppe bestehend aus einer Aminogruppe -NR₁R₂, einer Aryloxygruppe, einer Alkylgruppe, einer Arylgruppe, einer Alkylarylgruppe, einer Arylalkylgruppe, einer Thioethergruppe, einer Estergruppe oder einer Carbonsäuregruppe, und wobei R₃ und R₄ unabhängig voneinander Wasserstoff oder eine organische Gruppe sind, die ausgewählt ist aus der Gruppe bestehend aus einer C₁-C₂₀-Alkylgruppe, einer cyclischen C₃-C₂₀-Alkylgruppe, Arylgruppen, Alkylarylgruppen, Arylalkylgruppen und heterocyclischen Gruppen.

16. Vorläuferpolymerverbindung nach Anspruch 15, wobei R₀ eine Aminogruppe -NR₁R₂ ist.

17. Vorläuferpolymerverbindung nach Anspruch 16, wobei R₁ und R₂ unabhängig voneinander eine organische Gruppe sind, die ausgewählt ist aus der Gruppe bestehend aus einer C₁-C₂₀-Alkylgruppe, einer cyclischen C₃-C₂₀-Alkylgruppe, einer Arylgruppe, einer Alkylarylgruppe, einer Arylalkylgruppe und einer heterocyclischen Gruppe.

18. Vorläuferpolymerverbindung nach Anspruch 17, wobei R₁ und R₂ unabhängig ausgewählt sind aus der Gruppe bestehend aus einer Methylgruppe, einer Ethylgruppe, einer Propylgruppe, einer Phenylgruppe und einer Benzylgruppe.

19. Vorläuferpolymerverbindung nach einem der Ansprüche 15 bis 18, wobei das Ar eine aromatische divalente Gruppe mit 4 bis 20 Kohlenstoffatomen ist, substituiert mit einem oder mehreren Substituent(en), der bzw. die unabhängig ausgewählt ist bzw. sind aus der Gruppe bestehend aus C₁-C₂₀-Alkyl, C₃-C₂₀-Alkoxy, C₁-C₂₀-Alkylsulfat, Oligo- oder Polyethylenoxid, Oligo- oder Polyethylenglycol, einer Phenylgruppe oder einer Benzylgruppe, und wobei die Ar-Gruppe bis zu 4 Heteroatome umfasst, die ausgewählt sind aus der Gruppe umfassend Sauerstoff, Schwefel und Stickstoff in der aromatischen divalenten Gruppe.

20. Vorläuferpolymerverbindung nach einem der Ansprüche 15 bis 19, wobei die aromatische oder heteroaromatische divalente Gruppe ausgewählt ist aus der Gruppe bestehend aus 1,4-Phenylen; 2,6-Naphthalindiyl; 1,4-Naphthalindiyl; 1,4-Anthracendiyl; 2,6-Anthracendiyl; 9,10-Anthracendiyl; 2,5-Thienylen; 2,4-Thienylen; 2,3-Thienylen; 2,5-Furandiyl; 2,5-Pyrroldiyl; 1,3,4-Oxadiazol-2,5-diyl; 1,3,4-Thiadiazol-2,5-diyl; 2,5-Benzo[c]thienylen; Thieno[3,2-b]thiophen-2,5-diyl; Pyrrolo[3,2-b]pyrrol-2,5-diyl; Pyren-2,7-diyl; 4,5,9,10-Tetrahydropyren-2,7-diyl; 4,4'-Bi-phenylen; Phenantren-2,7-diyl; 9,10-Dihydrophenantren-2,7-diyl; Dibenzofuran-2,7-diyl; Dibenzothiophen-2,7-diyl.

21. Vorläuferpolymerverbindung nach einem der Ansprüche 15 bis 20, wobei das Vorläuferpolymer ein durchschnittliches Molekulargewicht zwischen 5.000 und 1.000.000 Dalton hat.

22. Vorläuferpolymerverbindung nach einem der Ansprüche 15 bis 21, wobei das Vorläuferpolymer eine Polydispersität zwischen 1,5 und 5,5 hat.

23. Vorläuferpolymerverbindung nach Anspruch 22, wobei das Vorläuferpolymer eine Polydispersität unter 2 hat.

24. Verfahren zur Herstellung eines konjugierten Polymers, umfassend die Struktureinheiten 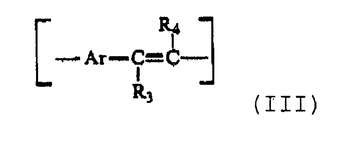 wobei Ar eine aromatische divalente Gruppe oder eine heteroaromatische divalente Gruppe ist, wobei R₃ und R₄ unabhängig voneinander Wasserstoff oder eine organische Gruppe sind, die ausgewählt ist aus der Gruppe bestehend aus einer C₁-C₂₀-Alkylgruppe, einer cyclischen C₃-C₂₀-Alkylgruppe, Arylgruppen, Alkylarylgruppen, Arylalkylgruppen und heterocyclischen Gruppen, wobei das Verfahren die folgenden Schritte umfasst:
- Bereitstellen mindestens eines Vorlauferpolymers nach einem der Ansprüche 15 bis 23 und
- Unterziehen des Vorlauferpolymers einem Warmeumsetzungsschritt bei einer Temperatur zwischen 30°C und 300°C.

25. Verfahren nach Anspruch 24, wobei R₀ eine Aminogruppe -NR₁R₂ ist.

26. Verfahren nach Anspruch 25, wobei R₁ und R₂ unabhängig voneinander eine organische Gruppe sind, die ausgewählt ist aus der Gruppe bestehend aus einer C₁-C₂₀-Alkylgruppe, einer cyclischen C₃-C₂₀-Alkylgruppe, einer Arylgruppe, einer Alkylarylgruppe, einer Arylalkylgruppe und einer heterocyclischen Gruppe.

27. Verfahren nach Anspruch 26, wobei R₁ und R₂ unabhangig ausgewählt sind aus der Gruppe bestehend aus einer Methylgruppe, einer Ethylgruppe, einer Propylgruppe, einer Phenylgruppe und einer Benzylgruppe.

28. Verfahren nach einem der Anspruche 24 bis 27, wobei das Vorlauferpolymer (II) Abgangsgruppen hat, die während des Warmeumsetzungsschrittes eliminiert werden, und wobei zwischen 0 und 10% der Abgangsgruppen während des Warmeumsetzungsschrittes nicht eliminiert werden, was zur Bildung eines teilweise umgesetzten konjugierten Polymers (III) führt.

29. Verfahren nach einem der Anspruche 24 bis 28, wobei die aromatische oder heteroaromatische flivalente Gruppe ausgewählt ist aus der Gruppe bestehend aus 1,4-Phenylen; 2,6-Naphthalindiyl; 1,4-Naphthalindiyl; 1,4-Anthracendiyl; 2,6-Anthracendiyl; 9,10-Anthracendiyl; 2,5-Thienylen; 2,4-Thienylen; 2,3-Thienylen; 2,5-Furandiyl; 2,5-Pyrroldiyl; 1,3,4-Oxadiazol-2,5-diyl; 1,3,4-Thiadiazol-2,5-diyl; 2,5-Benzo[c]thienylen; Thieno[3,2-b]thiophen-2,5-diyl; Pyrrolo[3,2-b]pyrrol-2,5-diyl; Pyren-2,7-diyl; 4,5,9,10-Tetrahydropyren-2,7-diyl; 4,4'-Bi-phenylen; Phenantren-2,7-diyl; 9,10-Dihydrophenantren-2,7-diyl; Dibenzofuran-2,7-diyl; Dibenzothiophen-2,7-diyl.

30. Verfahren nach Anspruch 29, wobei die aromatische oder heteroaromatische divalente Gruppe 1,4-Phenylen oder 2,5-Thienylen ist.

31. Verfahren nach Anspruch 30, wobei die aromatische oder heteroaromatische divalente Gruppe 2,5-Thienylen ist.

32. Verfahren nach einem der Ansprüche 24 bis 31, wobei R₃ und R₄ Wasserstoff sind.

33. Vorfahren nach einem der Ansprüche 24 bis 32, wobei das Polymer (III) ein konjugiertes Poly(arylenvinylen)polymer ist.

34. Verfahren nach Anspruch 33, wobei das konjugierte Arylenvinylenpolymer Poly(2,5-thienylenvinylen) ist.

35. Verfahren nach einem der Ansprüche 24 bis 34, wobei das Vorläuferpolymer (II) die Form einer Dünnfilmvorläuferpolymerschicht aufweist und wobei der Wärmeumsetzungsschritt unter Schutzatmosphäre durchgeführt wird.

36. Verfahren nach einem der Ansprüche 24 bis 35, wobei das Vorläuferpolymer (II) in einem Lösemittel aufgelöst wird, gefolgt von einem Entgasungsschritt.

## Revendications

1. procédé pour la préparation d'un polymère précurseur ayant la formule générale : 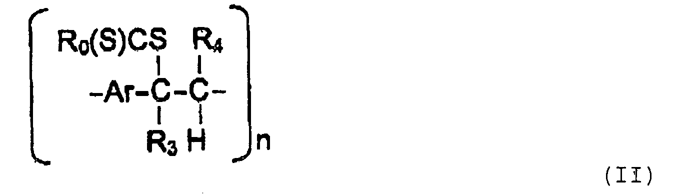 dans laquelle Ar est un groupe divalent aromatique ou un groupe divalent hétéroaromatique, R₀ est sélectionné à partir du groupe constitué par un groupe amino -NR₁R₂, un groupe aryloxy, un groupe alkyle, un groupe aryle, un groupe alkylaryle, un groupe arylalkyle, un groupe thioéther, un groupe ester ou un groupe acide carboxylique, et R₃ et R₄ sont, indépendamment l'un de l'autre, de l'hydrogène ou un groupe organique sélectionné à partir du groupe constitué par un groupe alkyle C₁-C₂₀, un groupe alkyle C₃-C₂₀ cyclique, des groupes aryle, des groupes alkylaryle, des grouper arylalkyle et des groupes hétérocycliques,
ledit procédé comprenant les étapes de :
- fourniture d'un monomère ayant la formule générale : 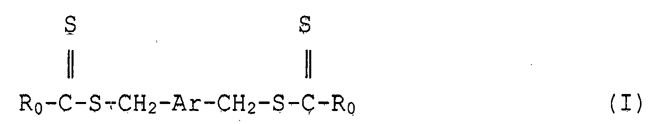 dans laquelle Ar est un groupe divalent aromatique ou un groupe divalent hétéroaromatique, R₀ est sélectionné à partir du groupe constitué par un groupe amine -NR₁R₂, un groupe aryloxy, un groupe alkyle, un groupe aryle, un groupe alkylaryle, un groupe arylalkyle, un groupe thioéther, un groupe ester et un groupe acide carboxylique, et
- réaction dudit monomère avec un composé basique en présence d'un solvant organique pour obtenir ledit polymère précurseur,
dans lequel la quantité dudit composé basique est entre 1 et 2 équivalents par rapport au monomère.

2. Procédé selon la revendication 1, dans lequel R₀ est un groupe amino -NR₁R₂.

3. Procédé selon la revendication 2, dans lequel R₁ et R₂ sont, indépendamment l'un de l'autre, un groupe organique sélectionné à partir du groupe constitué par un groupe alkyle C₁-C₂₀, un groupe alkyle, C₃-C₂₀ cyclique, un groupe aryle, un groupe alkylaryle, un groupe arylalkyle et un groupe hétérocyclique.

4. Procédé selon la revendication 3, dans lequel R₁ et R₂ sont indépendamment sélectionnés à partir du groupe constitué par un groupe méthyle, un groupe éthyle, un groupe propyle, un groupe phényle et un groupe benzyle.

5. Procédé selon l'une quelconque des revendications 1 à 4, dans lequel ledit composé basique est sélectionné à partir du groupe constitué par un hydrure métallique, un alcoxyde métallique, un hydroxyde métallique, un amide métallique, une amine métallique, un composé organométallique dans lequel le métal est un métal alcalin ou un métal alcaline-terreux, un réactif de Grignard, de l'hydroxyde d'ammonium, de la pyridine et des bases de phosphazène.

6. Procédé selon l'une quelconque des revendications 1 à 5, dans lequel la concentration dudit monomère (I) est entre 0,1 M et 0,3 M.

7. Procédé selon l'une quelconque des revendications 1 à 6, dans lequel Ar est un groupe divalent aromatique ou hétéroaromatique avec 4 à 20 atomes de carbone substitués par un ou plusieurs substituants indépendamment sélectionnés à partir du groupe constitué par l'alkyle C₁-C₂₀, l'alcoxy C₃-C₂₀, l'alkylsulfate C₁-C₂₀, oligo- ou de l'oxyde de polyéthylène, oligo- ou du polyéthylène glycol, un groupe phényle ou un groupe benzyle et dans lequel Ar comprend jusqu'à 4 hétéroatomes choisis à partir du groupe comprenant de l'oxygéne, du soufre et de l'azote dans le groupe divalent aromatique.

8. Procédé selon l'une quelconque des revendications 1 à 7, dans lequel ledit groupe divalent erometique ou hetéroaromatique est sélectionné à partir du groupe constitué par le 1,4-phénylene ; 2,6-naphtalènediyle ; 1,4-naphtalènediyle ; 1,4-anthrecènediyle ; 2,6-anthracènediyle ; 9,10-anthracènediyle ; 2,5-thiénylène ; 2,4-thiénylène ; 2,3-thiénylène ; 2,5-furanediyle ; 2,5-pyrrolediyle ; 1,3,4-oxadiazole-2,5-dyile ; 1,3,4-thiadiazole-2,5-diyle ; 2,5-benzo[c]thiénylene ; thieno[3,2-b]thiophène-2,5-diyle ; pyrrolo[3,2-b]pyrrole-2,5-diyle ; pyrène-2,7-diyle ; 4,5,9,10-tétrahydropyrène-2,7-diyle ; 4,4'-bi-phénylène ; phénantrène-2,7-diyle ; 9,10-dihydrophénantrène-2,7-dlyle ; dihenzofurane-2,7-diyle ; dibenzothiophène-2,7-diyle.

9. Procédé selon la revendication 8, dans lequel ledit groupe divalent aromatique ou hétéroaromatique est du 1,4-phénylène ou du 2,5-thiénylène.

10. Procédé selon la revendication 9, dans lequel ledit groupe divalent aromatique ou hétéroaromatique est du 2,5-thiénylène.

11. Procédé selon la revendication 4, dans lequel R₁ et R₂ sont, indépendamment l'un de l'autre, sélectionnés à partir du groupe constitué par le méthyle, l'éthyle et l'isopropyle.

12. Procédé selon l'une quelconque des revendications 1 à 11, dans lequel ledit solvant organique est un solvant aprotique.

13. Procédé selon l'une quelconque des revendications 1 à 12, dans lequel ladite étape de réaction est effectuée à une température entre -78 °C et 200 °C.

14. Procédé selon la revendication 13, dans lequel ladite étape de réaction est effectuée à une température entre -20 °C et 30 °C.

15. Composé de polymère précurseur ayant de la formule générale 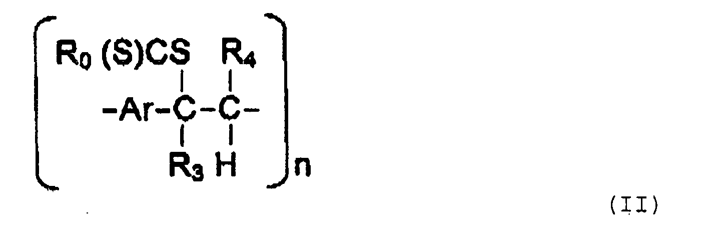 dans laquelle Ar est un groupe aromatique ou un groupe divalent hétéroaromatique, R₀ est sélectionné à partir du groupe constitué par un groupe amino -NR₁R₂, un groupe aryloxy, un groupe alkyle, un groupe aryle, un groupe alkylaryl, un groupe arylalkyle, un groupe thioéther, un groupe ester ou un groupe acide carboxylique, et R₃ et R₄ sont indépendamment l'un de l'autre de l'hydrogène ou un groupe organique sélectionné à partir du groupe constitué par un groupe alkyle C₁-C₂₀, un groupe alkyle C₃-C₂₀ cyclique, des groupes aryle, des groupes alkylaryle, des groupes arylalkyle et des groupes hétérocycliques.

16. Composé de polymère précurseur selon la revendication 15, dans lequel R₀ est un groupe amino -NR₁R₂.

17. Composé de polymère précurseur selon la revendication 16, dans lequel R₁ et R₂ sont indépendamment l'un de l'autre un groupe organique sélectionné à partir du groupe constitué par un groupe alkyle C₁-C₂₀, un groupe alkyle C₃-C₂₀ cyclique, un groupe aryle, un groupe alkylaryle, un groupe arylalkyle et un groupe hétérocyclique.

18. Composé de polymère précurseur selon la revendication 17, dans lequel R₁ et R₂ sont indépendamment sélectionnés à partir du groupe constitué par un groupe méthyle, un groupe éthyle, un groupe propyle, un groupe phényle et un groupe benzyle.

19. Composé de polymère précurseur selon l'une quelconque des revendications 15 à 18, dans lequel l'Ar est un groupe divalent aromatique avec 4 à 20 atomes de carbone substitués par un ou plusieurs substituants indépendamment sélectionnés à partir du groupe constitué par l'alkyle C₁-C₂₀, l'alcoxy C₃-C₂₀, l'alkylsulfate C₁-C₂₀, oligo- ou de l'oxyde de polyéthylène, oligo- ou du polyéthylène glycol, un groupe phényle ou un groupe benzyle et dans lequel un groupe Ar comprend jusqu'à 4 hétéroatomes choisis à partir du groupe comprenant de l'oxygène, du soufre et de l'azote dans le groupe divalent aromatique.

20. Composé de polymère précurseur selon l'une quelconque des revendications 15 à 19, dans lequel ledit groupe divalent aromatique ou hétéroaromatique est sélectionné à partir du groupe constitué par le 1,4-phénylène ; 2,6-naphtalènediyle ; 1,4-naphtalènediyle ; 1,4-anthracènediyle ; 2,6-anthracènediyle ; 9,10-anthracènediyle ; 2,5-thiénylène ; 2,4-thiénylène ; 2,3-thiénylène ; 2,5-furanediyl; 2,5-pyrrolediyle ; 1,3,4-oxadiazole-2,5-dyile ; 1,3,4-thiadiazole-2,5-diyle ; 2,5-benzo[c]thiénylène ; thiéno[3,2-b]thiophène-2,5-diyle ; pyrrolo[3,2-b]pyrrole-2,5-diyle ; pyrène-2,7-diyle ; 4,5,9,10-tétrahydropyrène-2,7-diyle ; 4,4'-bi-phénylène ; phénantrène-2,7-diyle ; 9,10-dihydrophénantrène-2,7-diyle ; dibenzofurane-2,7-diyl; dibenzothiophene-2,7-diyle.

21. Composé de polymère précurseur selon l'une quelconque des revendications 15 à 20, dans lequel ledit polymère précurseur a une masse moléculaire moyenne entre 5 000 et 1 000 000 Daltons.

22. Composé de polymère précurseur selon l'une quelconque des revendications 15 à 21, dans lequel ledit polymère de précurseur a une polydispersité entre 1,5 et 5,5.

23. Composé de polymère précurseur selon la revendication 22, dans lequel ledit polymère précurseur a une polydispersité inférieure à 2.

24. Procédé pour la préparation d'un polymère conjugué comprenant les unités structurelles 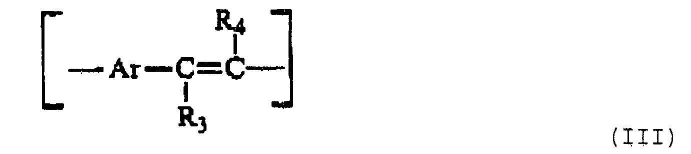 dans lequel Ar est un groupe divalent aromatique ou un groupe divalent hétéroaromatique, R₃ et R₄ sont indépendamment l'un de l'autre de l'hydrogène ou un groupe organique sélectionné à partir du groupe constitué par un groupe alkyle C₁-C₂₀, un groupe alkyle C₃-C₂₀ cyclique, des groupes aryle, des groupes alkylaryle, des groupes arylalkyle et des groupes hétérocyçliques, ledit procédé comprenant les étapes de :
- fourniture d'au moins un polymère précurseur selon l'une quelconque des revendications 15 à 23, et
- soumission dudit polymère précurseur à une étape de transformation thermique à une température entre 30 °C et 300 °C.

25. Procédé selon la revendication 24, dans lequel R₀ est un groupe amino -NR₁R₂.

26. Procédé selon la revendication 25, dans lequel R₁ et R₂ sont, indépendamment l'un de l'autre, un groupe organique sélectionné à partir du groupe constitué par un groupe alkyle C₁-C₂₀, un groupe alkyle C₃-C₂₀ cyclique, un groupe aryle, un groupe alkylaryle, un groupe arylalkyle et un groupe hétérocyclique.

27. Procédé selon la revendication 26, dans lequel R₁ et R₂ sont indépendamment sélectionnés à partir du groupe constitué par un groupe méthyle, un groupe éthyle, un groupe propyle, an groupe phényle et un groupe benzyle.

28. Procédé selon l'une quelconque des revendications 24 à 27, dans lequel ledit polymère précurseur (II) a des groupes partants éliminés pendant ladite étape de transformation thermique, et dans lequel entre 0 et 10 % desdits groupes partants ne sont pas éliminés pendant ladite étape de transformation thermique, conduisant ainsi à la formation d'un polymère conjugué partiellement transformé (111).

29. Procédé selon l'une quelconque des revendications 24 à 28, dans lequel ledit groupe divalent aromatique ou hétéroaromatique est sélectionné à partir du groupe constitué par le 1,4-phénylène ; 2,6-naphtalènediyle ; 1,4-naphtalènediyle ; 1,4-anthracènediyle ; 2,6-enthracènediyle ; 9,10-anthracénediyie ; 2,5-thiénylène ; 2,4-thiénylène ; 2,3-thiénylène ; 2,5-fuxanediyle ; 2,5-Tpyrrolediyle ; 1,3,4-oxadiazole-2,5-dyile ; 1,3,4-thiadiazole-2,5-diyle ; 2,5-benzo[c]thiénylène ; thiéno[3,2-b]thiophene-2,5-diyle ; pyrrolo[3,2-b]pyrrole-2,5-diyle ; pyréne-2,7-diyle ; 4,5,9,10-tétrahydropyrène-2,7-diyle ; 4,4'-bi-phénylène ; phénentréne-2,7-diyle ; 9,10-dihydrophénantrène-2,7-diyle ; dibenzofurane-2,7-diyle ; dibenzothiophène-2,7-diyle.

30. Procédé selon la revendication 29, dans lequel ledit groupe divalent aromatique ou hétéroaromatique est du 1,4-phénylène ou du 2,5-thiénylène.

31. Procédé selon la revendication 30, dans lequel ledit groupe divalent aromatique ou hétéroaromatique est du 2,5-thiénylène.

32. Procédé selon l'une quelconque des revendications 24 à 31, dans lequel R₃ et R₄ sont de l'hydrogène.

33. Procédé selon l'une quelconque des revendications 24 à 32, dans lequel ledit polymère (III) est un polymère conjugué de polo(amylène vinylène).

34. Procédé selon la revendication 33, dans lequel ledit polymère conjugué d'arylène vinylène est du poly(2,5 thiénylène vinylene).

35. Procédé selon l'une quelconque des revendications 24 à 34, dans lequel ledit polymère précurseur (II) est sous la forme d'une couche de polymère précurseur en film mince et dans lequel ladite étape de transformation thermique est effectuée sous une atmosphère inerte.

36. Procédé selon l'une quelconque des revendications 24 à 35, dans lequel ledit polymère précurseur (II) est dissous dans un solvant suivi par une étape de dégazage.
